(19) **Europäisches Patentamt European Patent Office Office européen des brevets**

(11) **EP 3 861 288 B1**

(12) **EUROPEAN PATENT SPECIFICATION**

(45) Date of publication and mention of the grant of the patent:
**26.03.2025 Bulletin 2025/13**

(21) Application number: **19784005.1**

(22) Date of filing: **30.09.2019**

(51) International Patent Classification (IPC):
*G01C 21/34* (2006.01)  *G01C 21/36* (2006.01)
*G01G 19/10* (2006.01)  *G01G 19/12* (2006.01)

(52) Cooperative Patent Classification (CPC):
**G01C 21/3469; B60C 23/0493; B60C 23/064;**
**B60L 3/12; B60L 58/12; G01C 21/36;**
**G01C 21/3697; G01G 19/02;** B60L 2240/622;
B60L 2240/642; B60L 2250/10; B60L 2250/16;
B60L 2250/18; B60L 2260/52; G01C 21/3691;
(Cont.)

(86) International application number:
**PCT/EP2019/076411**

(87) International publication number:
**WO 2020/070051 (09.04.2020 Gazette 2020/15)**

(54) **METHOD AND SYSTEM FOR ESTIMATING A RESIDUAL RANGE OF A VEHICLE**

VERFAHREN UND SYSTEM ZUR SCHÄTZUNG EINES RESTBEREICHS EINES FAHRZEUGS

PROCÉDÉ ET SYSTÈME POUR ESTIMER UNE DISTANCE RÉSIDUELLE D'UN VÉHICULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.10.2018 IT 201800009096**

(43) Date of publication of application:
**11.08.2021 Bulletin 2021/32**

(73) Proprietor: **Pirelli Tyre S.p.A.**
**20126 Milano (IT)**

(72) Inventors:
• **GIANNESI, Pier, Giovanni**
**20126 Milano (IT)**

• **GARBELLI, Daniele**
**20126 Milano (IT)**

(74) Representative: **Maccalli, Marco et al**
**Maccalli & Pezzoli S.r.l.**
**Via Settembrini, 40**
**20124 Milano (IT)**

(56) References cited:
WO-A2-2013/108246  JP-A- 2012 218 682
KR-A- 20140 042 281  US-A1- 2011 112 710
US-A1- 2012 253 655  US-A1- 2013 179 062
US-A1- 2014 008 132  US-A1- 2014 107 913
US-A1- 2014 257 629  US-A1- 2015 006 051
US-A1- 2016 097 652  US-A1- 2017 030 728
US-A1- 2017 101 026

(52) Cooperative Patent Classification (CPC): (Cont.)
Y02T 10/70; Y02T 10/72; Y02T 90/16

**Description**

**Background of the invention**

**Field of the invention**

The present invention generally relates to the automotive field. More particularly, the present invention relates to methods and systems for estimating a range of a vehicle, i.e., a residual distance (mileage) that can be covered by a vehicle with the available fuel or energy, without refuelling. Particularly, the present invention proposes a method and a system for estimating a vehicle range by taking into account characteristics of routes determined by a vehicle navigation system.

**Overview of the related art**

Vehicle navigation systems based on satellite systems (Global Navigation Satellite Systems or GNSS), like the Global Positioning System (GPS), Galileo and GLONASS, which provide geo-spatial positioning information of the vehicle, are widely known and used to determine a route, e.g. of a vehicle, from an origin to a destination (in the following also shortly referred to as "route"). When two or more different routes exist to go from an origin to a destination, the different routes normally feature different route characteristics. For example, certain routes may be longer in terms of distance to travel (travel distance) than others. Or, certain routes may have longer travel times than others. Most, not to say all conventional vehicle navigation systems perform a route determination, ranking (and proposal to a vehicle driver) based on travel distance or travel time.

US 8,706,416 discloses a method for determining a route for a vehicle that includes receiving input indicative of a driver's dynamic control of the vehicle, determining the driver's driving style based on the input, and selecting values of parameters representing the driver's anticipated dynamic control of the vehicle based on the driving style. The method also includes identifying a plurality of candidate routes between an origin and destination, partitioning each of the candidate routes into a set of predefined route patterns, and determining an energy usage associated with each of the candidate routes based on the selected values and the set of predefined route patterns defining the candidate route. The method further includes identifying the candidate route having the minimum energy usage and providing output describing the route having the minimum energy usage.

US 5,913,917 discloses a method and apparatus for prediction or estimation of fuel or energy consumption by a vehicle over a chosen trip route, where the route includes a plurality of road segments. Fuel consumption over each road segment is estimated, using information on one or more of the following variables: representative altitude of the road segment; representative slope of the road segment; estimated vehicle average speed along the road segment; length of the road segment; condition of the road segment; condition of the vehicle tires; expected vehicle traffic density along the road segment; applicable constraints on vehicle operation along the road segment; expected ambient weather conditions along the road segment; vehicle accessories that will be used; and vehicle driver profile information. Weather conditions enroute, such as local wind speed and direction, can be measured and used to enhance accuracy of predicted fuel consumption. Fuel consumption can be estimated initially, can be re-estimated enroute, using actual fuel consumption for the portion of the route already traveled, and can be estimated for a return trip along the same route. Fuel consumption can be estimated where the route is not initially specified. The fuel consumed may be electrical charge, gasoline, kerosene, natural gas, diesel fuel, or any similar fuel.

US 2013/179062 A1 discloses a travel distance estimating apparatus that estimates a travel distance of a moving body in a given section through which the moving body travels ("travel interval"). A current position acquiring unit acquires the current position of the moving body. A variable acquiring unit acquires information related to the speed of the moving body in the travel interval. An estimating unit estimates based on a consumed energy estimating equation, energy consumption and a travelable distance for travel through the travel interval. A correcting unit corrects information related to the moving body and used as variables of the consumed energy estimating equation. A storage unit stores information related to roads associated with a travel history of the moving body. A display unit displays map data including information related to travelable distance calculated by the estimating unit.

KR 2014 0042281 A discloses a navigation device using weighted value information relative to the battery consumption of an electric vehicle and a method thereof. The method comprises calculating driving efficiency according to the residue of a battery by using the weighted value information of battery consumption directly related to the driving of an electric vehicle; and providing an optimal route which can minimize the battery consumption based on the driving efficiency, and minimizing the battery consumption based on the driving efficiency.

WO 2013/108246 A2 discloses a method and system for calculating a remaining travelable distance of a vehicle powered by a battery. In some embodiments the remaining travelable distance is determined using data indicative of a route of the vehicle, statistical data related to a route and to a user of the vehicle, and data about a measured charge level of the battery of the vehicle indicative of an amount of energy stored in the battery. The statistical data may be utilized to determine a rate of battery energy flow for the battery of the vehicle indicative of a rate of discharge and/or recharge of battery energy along at least a segment of road of the route, such that the remaining travelable distance may be determined based on the determined rate of battery energy flow and the charge level of the battery.

US 2017/101026 A1 discloses a method for estimating a range of an electric or hybrid vehicle over a predetermined trip that includes estimating energy available in a traction battery of the vehicle as a function of a temperature of the battery and calculating a value representative of a trend of the temperature of the battery during the trip. The value is used to estimate the energy available.

US 2014/107913 A1 discloses determining remaining vehicle range by adjusting measured estimates on the fly accounting for road effects, the state of vehicle accessories, and other conditions.

US 2016/097652 A1 discloses a vehicle that includes a powertrain having a battery-powered electric machine. The vehicle also includes a controller programmed to display, on a geographical map, at least one contour line indicating an available driving distance from a current location. The distance of the contour line from the current location is based on energy stored within the battery and predicted energy consumption due to driving along each of a plurality of possible routes originating from the current location. The predicted energy consumption is updated based on energy depletion events that occur during driving.

US 2012/253655 A1 discloses a vehicle information display system that includes a navigation apparatus and a vehicle information display apparatus. The navigation apparatus includes: a storage section mounted on an electric vehicle, for storing map information and a destination; an own vehicle position information acquisition section for obtaining own vehicle position information; a remaining power amount acquisition section for obtaining a remaining power amount; a travel cost calculation section for calculating a power cost based on the map information, the destination, and the own vehicle position information; a travelable range calculation section for calculating a travelable range based on the power cost and the remaining power amount; and a communication section for transmitting vehicle information including the travelable range to the outside. The vehicle information display apparatus includes: a communication section installed outside the electric vehicle, for receiving the vehicle information; and a control section for outputting the vehicle information.

US 2011/112710 A1 discloses a method for estimating the range of a motor vehicle based on a quantity of energy carried in the motor vehicle. The method enables a driver to limit a maximum permissible velocity and/or a maximum permissible acceleration and/or a maximum performance level for a comfort system. The method also detects the route profiles surrounding the motor vehicle, in particular an altitude profile and/or a road category. A computer device calculates and displays a still possible range at least on the basis of the limitation which has been carried out, the detected route profiles and the still available quantity of energy.

JP 2012 218682 A discloses a wheel load value calculating device that includes: sensor units for measuring pneumatic pressure of the tires installed in wheels of a vehicle; piezoelectric elements for detecting a change in the circumferential direction and a change in the width direction of a tire load applied to the tires when the vehicle travels; and a control device for calculating a tire load value. The control device calculates the grounding area of the tires based on the grounding length in the circumferential direction of the tires and a grounding width in the width direction of the tires, and also calculates the tire load value by using a correlation between the grounding area and the tire load value set with every pneumatic pressure of the tires based on a calculation value of the grounding area and a measured value of the tire pneumatic pressure.

US 2014/257629 A1 discloses a dynamic load estimation system including: a vehicle load bearing tire; at least one tire sensor mounted to the tire, the sensor operable to measure a tire deformation of the one tire and generate a raw load-indicating signal conveying measured deformation data; road roughness estimation means for determining a road roughness estimation; filtering means for filtering the measured deformation data by the road roughness estimation; and load estimation means for estimating an estimated load on the one tire from filtered measured deformation data. A road profile estimate is fused with the static load estimate in order to obtain an instantaneous tire load estimate.

US 2014/008132 A1 discloses a method for determining the load of a motor vehicle that includes the following steps: detecting at least one physical measured variable that depends on the load and generating a measured value that represents the detected measured variable; evaluating the generated measured values in order to determine the load by correlating the generated measured values or the load values determined therefrom with each other in order to produce a correction value from the correlation, with the aid of which an actual load value is determined for the load of the motor vehicle. A system for detecting the load of a motor vehicle is also disclosed.

US 2015/006051 A1 discloses that the dynamic footprint of a tire is received and the dynamic footprint is determined by and received from a tire pressure monitoring (TPM) sensor. A weight or load of the secondary vehicle attached to the primary vehicle is calculated based at least in part on the footprint. Instructions to alter the operation of the braking system of the secondary vehicle based on the calculated weight or load are transmitted to the secondary vehicle.

US 2017/030728 A1 discloses a method that includes: receiving information corresponding at least to (i) a state of charge of an energy storage of a vehicle, (ii) route information corresponding to a planned driving route for the vehicle, and (iii) a predicted driver characteristic; determining using the received information, and presenting to a driver of the vehicle, a first energy-versus-distance measure for the planned driving route; receiving a user input indicating a proposed change in at least the driver characteristics, and determining using the received information and the user input, and presenting to the driver, a second energy-versus-distance measure for the planned driving route that takes into account the proposed change.

## Summary of the invention

The Applicant has realized that travel distance and travel time are not the only useful characteristics of a route (hereinafter, route characteristics) for, e.g., discriminating different possible alternative vehicle routes for going from an origin to a destination.

The Applicant has realized that there are other vehicle route characteristics that may be as important as, or, in some cases, even more import than travel distance and travel time.

An example of a vehicle route characteristic different from travel distance and travel time that may be of importance in, e.g., deciding whether to take a route, or in deciding which vehicle route to take among different possible alternative vehicle routes, is the presence of uphill and/or downhill route sections along a vehicle route, and the uphill/downhill gradients. Another example of a vehicle route characteristic different from travel distance and travel time that may be of importance in deciding whether to take a route or which vehicle route to take, among different possible alternative vehicle routes, is the degree of winding (number and type of curves) of a certain vehicle route.

Different vehicle route characteristics cause different vehicle routes to involve different vehicle energy usage or fuel consumption. Energy usage or fuel consumption of a vehicle is not directly (or not only) correlated with travel distance or travel time. For example, a vehicle route determined to be the shortest vehicle route for going from an origin to a destination may include route sections with significant slopes, particularly uphill route sections, which may cause the vehicle energy usage or fuel consumption to be significantly higher than that of a smoother, albeit even significantly longer (in terms of travel distance) alternative vehicle route.

Vehicle energy usage or fuel consumption has an immediate impact on the vehicle range (residual mileage), i.e. the distance that a vehicle can travel with the available energy/fuel, without refuelling.

Since different vehicle routes (for going from an origin to a destination) generally involve different vehicle energy usage or fuel consumption, in dependence of their route characteristics, then the vehicle range depends on the chosen vehicle route.

The Applicant has perceived that taking into consideration the vehicle range when deciding to choose a vehicle route for travelling from an origin to a destination is an important thing, for example to avoid (the risk of) remaining without fuel/energy during the travel, or simply to avoid that, during the travel, the vehicle driver and/or occupants experiences the fear that the vehicle range is not sufficient to reach the desired destination and the vehicle would thus strand the vehicle's occupants, a phenomenon reported in the literature as "range anxiety".

The Applicant has perceived that when presenting to a vehicle driver a vehicle route for going from an origin to a destination, possibly a vehicle route among two or more different possible alternative vehicle routes for going from the origin to the destination, not only the respective travel distance(s) and/or travel time(s) should be presented, but also the respective vehicle range, i.e. the distance that the vehicle can travel, with the available energy/fuel and without refuelling, along the route or different alternative routes.

**In** this way, the vehicle driver may make the decision of whether or not to take the vehicle route, or which vehicle route to choose among different possible alternative vehicle routes, by taking into account not only the knowledge of the travel distance/travel time of the vehicle route or the different alternative vehicle routes, but also the knowledge of the vehicle range for the (different alternative) vehicle route(s).

For example, the vehicle driver may still decide to take (or choose, among the alternative routes) the shortest route in terms of travel distance or the fastest route in terms of travel time, despite such a route involves a higher consumption of vehicle energy/fuel, but, based on the knowledge that the vehicle range will or could be insufficient for reaching the desired destination, before starting the travel the driver may decide to refuel/recharge the vehicle. This is especially important in the case of electric or hybrid vehicles: in fact, despite the number of charge stations for Electric Vehicles (EV) is growing, until they are as ubiquitous as gas stations, EV drivers will experience "range anxiety" and having a knowledge of the range of EV will remain of the outmost importance, because there are vast areas of land where EV charge stations are extremely rare or totally absent.

The Applicant has thus perceived that the capability of accurately estimating the vehicle range for a vehicle route having certain route characteristics, or for different vehicle routes having different route characteristics, that influence the vehicle fuel/energy consumption is important.

The range of a vehicle is influenced by numerous factors, e.g., the vehicle speed, the presence of uphill/downhill road sections and their gradient, the vehicle driver's drive style, the weather conditions, just to mention some.

In addition to the above, the fuel/energy consumption of the vehicle and therefore its range, depend on the vehicle weight. The Applicant has perceived that the "weight" of a vehicle is not a fixed value but significantly depends upon its load (including loaded people and objects). To the purposes of the present invention, the vehicle weight corresponds to the sum of the vehicle's empty weight plus the vehicle load.

The Applicant has realized that the actual weight of the vehicle is an important parameter to take into account when presenting to the driver the (one or more) possible vehicle route(s) for going from an origin to a destination. For example, the range of a heavily loaded vehicle when travelling along a route with uphill/downhill with substantial gradient (or a degree of up and down routing higher than a predetermined value) is strongly reduced (compared to a smoother, even if possibly longer, route): the driver of the heavily loaded vehicle should be made aware of this, so that he/she can make a reasoned decision, possibly selecting a different route, or properly refuelling the vehicle before starting the travel or during the travel itself.

It is however appreciated that the vehicle weight is not a predetermined quantity. As a matter of fact, a car has a certain empty weight, which is known, but its weight does substantially change when the car is loaded with the driver and one, two or more passengers, possibly with luggage in the trunk and/or in a luggage rack. Even more pronounced load variations in use are experienced by commercial vehicles, destined to the transportation of goods.

The Applicant has perceived that an accurate, real-time or substantially real-time, estimation of the actual vehicle weight is needed in order to be able to estimate the vehicle range for different alternative vehicle routes having different route characteristics.

The Applicant has faced with the problem of estimating a vehicle range in respect of a vehicle route for going from an origin to a destination by taking its (actual or total) weight into proper account (to the purposes of the present invention the expression "weight" does indicate the actual or total weight of the vehicle as described).

The invention is defined by the appended independent claims. Further details are defined by the appended dependent claims.

Several techniques can be used for the real-time or substantially real-time estimation of the vehicle weight. In this respect, the Applicant has observed that information derived by the vehicle's tires (hereafter also referred to as "tire-related information") can be useful to estimate the actual vehicle weight.

Tire monitoring units are known which, when placed within the tires, have the task of detecting tire's characteristic values, so as to allow substantially real-time monitoring and control of the operation and conditions of the tire.

Usually, tire monitoring units periodically dialogue with devices on board the vehicles, so that all the detected information can be provided to the driver and/or vehicle control systems, to, for example, activate or adjust to the best alarm systems and/or vehicle dynamics control, braking, etc.

Tire monitoring units typically comprise an electronic unit and a securing device for securing the electronic unit inside the tire. The electronic unit comprises at least one sensor (for example a temperature sensor, a pressure sensor, an accelerometer, a strain gauge, a piezoelectric sensor etc.) and a transmission system for sending the data detected by said at least one sensor to a receiving unit located on the vehicle. The electronic unit typically comprises a processing unit.

A parameter that can be monitored during tire rolling is the length of the contact area (so-called "patch") between the tire and the rolling surface (e.g., the road surface). The length of the contact area can also be ultimately related to other parameters related to tires, such as for example the load exerted on the tire by the vehicle, which in turn is related to the vehicle weight.

The Applicant has thus observed that the length of the tire contact area with the rolling surface is a promising source of information for estimating the vehicle weight.

However, estimating the length of the tire contact area is one of the most challenging tasks, since it requires tire monitoring units with a sophisticated hardware comprising a sensor able to detect the tire's deformations during rolling, such as for example a sensor being able to measure radial acceleration or other physical quantity descriptive of the tire deformation during rolling.

A sensor able to detect the tire's deformations needs to be operated at a high sampling frequency, in order to properly reconstruct the profile (e.g., the acceleration profile) descriptive of the tire deformation over time. From such reconstructed profile, the length of the tire contact area can be identified (e.g., by measuring the width of relevant peaks and/or valleys in the profile), and its length can be estimated.

However, in the perception of the Applicant, when real time monitoring is considered, carried out at a typical, average running speed or at a high speed, it has to be taken into account that the monitoring unit attached to the tire is caused to pass in correspondence of the tire contact area many times per second. For example, at 50 km/h a tire rotates at about 7 turns/s, i.e., seven tire roundtrips per second.

Furthermore, in the perception of the Applicant, the length of the tire contact area represents on average only a small portion (3% to 15%) of the tire circumference, so that the tire monitoring unit remains in correspondence of the tire contact area for a very small amount of time over a tire roundtrip. The Applicant further considered that entering and exiting from the tire contact area is a very abrupt transition which generates sharp variations in the signal sensed by the sensor, further increasing the need of a very high sampling frequency, of the order of some KHz, e.g., 5 KHz, in order to precisely identify the start and the end of the portion of the measured profile corresponding to the tire contact area. Lower sampling frequencies, e.g., 2 kHz, leads to a progressive decrease of the precision since a high frequency measurement is substantially a direct measurement of the length of the tire contact area relying upon a precise tracking of the tire monitoring unit during its passage in the tire contact area itself. Further sampling frequency reduction will eventually hinder the possibility of using a direct measurement of the length of the tire contact area since too few sampling points will be available for a precise tire monitoring unit tracking in the contact area, i.e., for the reconstruction of the peaks/valleys representing the passage of the tire monitoring unit in the contact area.

The above would generate the need to use sophisticated and expensive tire monitoring units comprising sensors and related electronic control units which are driven and operated at a very high sampling frequency (i.e., at sampling frequency high enough to properly reconstruct the signal generated by the sensor), which implies high power needs and consumption. Moreover, it would also create the need of transmitting a huge amount of data generated during sampling to an external (to the tire) control unit. Alternatively, the raw sensed data could be filtered and processed within the monitoring unit itself, but also in this case power consumption and hardware complexity would be increased.

On the other hand, in the Applicant perception, low power consumption is the most important aspect in making a viable tire monitoring unit. Practically, a tire monitoring unit mounted inside a tire can only be powered by a battery. In fact, despite of energy-scavenging solutions having been proposed, the battery is and will remain the main source of power of a tire monitoring unit. Replacing an exhausted battery is not feasible: the battery is required to last at least as long as the tire normal operating lifetime.

The Applicant has observed that relatively low-cost, cheap tire monitoring units are currently available on the market that generally comprise temperature and/or pressure sensors and an accelerometer or other inertial sensor, whose output signal is only used to trigger the temperature and/or pressure measurements when the tire starts to rotate, so as to save power when the vehicle is at rest (e.g., during parking). Since the tire pressure or the tire temperature does not need to be measured at high frequency, such sensors are typically operated at low sampling frequency in order to save power.

That is, the output signal of the accelerometer (or other inertial sensor) of such cheap tire temperature and/or pressure monitoring units is only used to trigger the temperature and/or pressure measurements when the tire starts to rotate.

By observing the output signal of the accelerometer (or other inertial sensor) of such cheap tire temperature and/or pressure monitoring units for a number of tire roundtrips, the Applicant wondered whether such output signal could be put in relation with a measure of the contact area of the tire with the rolling surface.

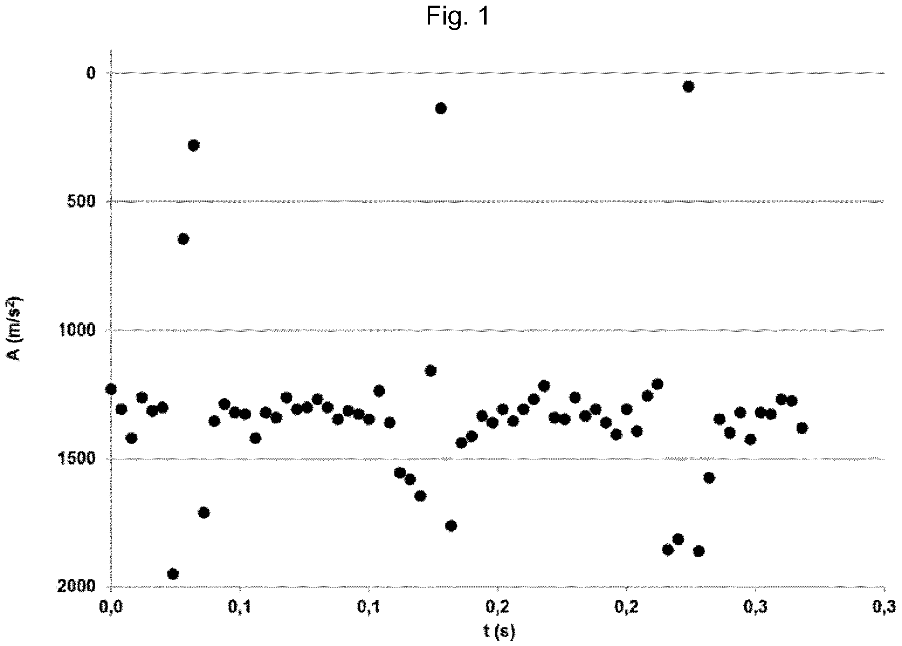

Reference is made to Fig. 1, which is a plot of an exemplary output of the radial acceleration values measured with the above-mentioned kind of low-cost sensors. Three consecutive tire roundtrips of a tire fitted on a vehicle have been tracked at a vehicle speed of 80 km/h. The plot of **Fig. 1** was obtained with a sampling frequency of the output signal of the accelerometer (radial acceleration) of 250 Hz (i.e., twenty times smaller than the 5 kHz sampling frequency mentioned in the foregoing, necessary for reconstructing rather precisely the acceleration profile).

It can be seen that the resulting acceleration profile depicted in **Fig. 1** shows very few sampling points by which it is impossible to perform a precise tracking of the tire monitoring unit in its approaching, entering, remaining in correspondence of, and exiting the tire contact area.

In other words, from an undersampled profile of the type shown in **Fig. 1** it is impossible to determine the length of the tire contact area.

However, the Applicant noticed that even in such undersampled acceleration profile, some information still remains related to the passage of the tire monitoring unit in correspondence of the tire contact area: in the particular example shown in **Fig. 1,** samples whose value lay in proximity of, or relatively close to, zero radial acceleration can be considered as being representative of the fact that the tire monitoring unit is in correspondence of the tire contact area with the rolling surface at that sampling time (it should be kept in mind that while the tire monitoring unit remains in correspondence of the tire contact area, the radial acceleration is substantially zero, since the tire monitoring unit is locally moving on a substantially rectilinear path).

The Applicant understood that such very partial information regarding the tire monitoring unit passing in correspondence of the tire contact area, which is unusable over a single or few tire roundtrips, could be used for performing a monitoring based on a statistical analysis made on measurements carried out over a sufficiently high number of tire roundtrips during tire rolling.

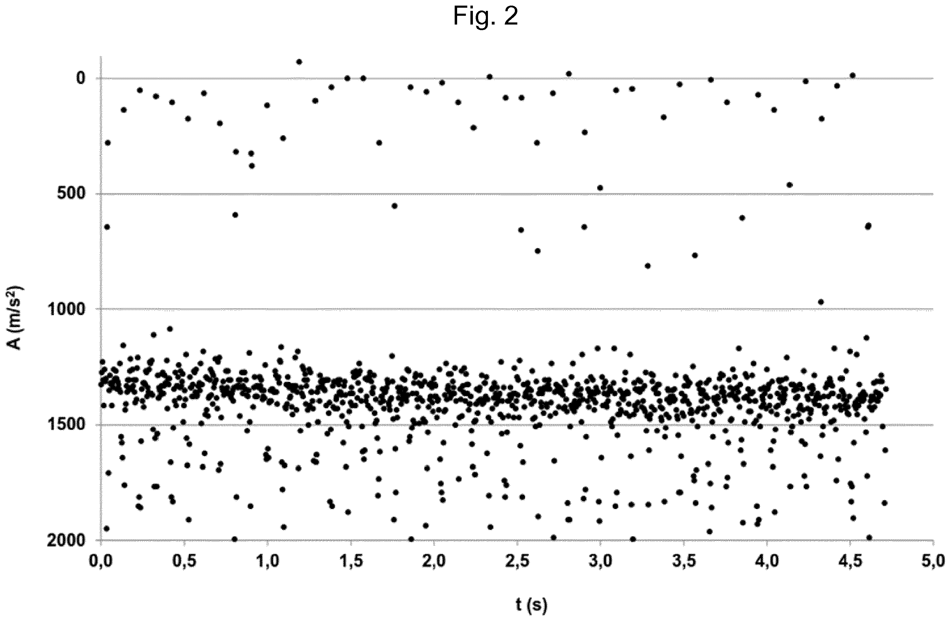

To illustrate further this Applicant's intuition, reference in now made to **Fig. 2** wherein the output signal of the accelerometer (radial acceleration) is plot versus time: in this case the graph shows the results of a measurement of the radial acceleration being carried out for about 5 seconds, i.e., a time frame fifteen times longer than in the previously discussed example of **Fig.** 1, in order to include a sufficiently high number of tire roundtrips.

For the sake of a good comparison, as in the previous example the vehicle speed has been set to 80 km/h and the sampling frequency of the accelerometer output signal is 250 Hz as in the example of **Fig. 1.**

Differently from **Fig. 1,** in **Fig. 2** it is possible to distinguish a clearer pattern, or a distribution, of samples. In particular it can be noticed that a first group of samples lays in proximity of, or relatively close to, zero radial acceleration; these samples can be considered as being representative of passages of the tire monitoring unit in correspondence of the tire contact area at the respective sampling times. On the other hand, all the remaining samples can be considered as being representative of the tire monitoring unit being outside the tire contact area at the respective sampling times.

By looking at graphs like the one shown in **Fig. 2,** the Applicant has appreciated that even from an undersampled acceleration signal (or other signal of a measured physical quantity representative of tire deformation) it is possible to extract, from the overall measurements, data representing passages of the tire monitoring unit in correspondence of the tire contact area.

The Applicant further perceived that by counting the number of passages (of the tire monitoring unit in correspondence of the tire contact area) in a certain amount of time, the probability of finding the tire monitoring unit in correspondence of the tire contact area at a certain time during tire rolling could be estimated: the higher the value of said number of passages in said amount of time, the higher the time spent by the tire monitoring unit in correspondence of the tire contact area within said amount of time, and consequently the higher the probability of finding the tire monitoring unit in correspondence of the tire contact area at a certain time during tire rolling.

In the perception of the Applicant, such probability can be calculated as the ratio between the number of detected passages in said amount of time and an overall number of measurements within said amount of time at the sampling frequency, or as an alternative, such probability can be calculated as the ratio between the cumulated time associated with the detected passages (i.e., the number of detected passages multiplied by the sampling period or the inverse of the sampling frequency) and said amount of time.

The above perception led the Applicant to adopting a statistical approach for the estimation of the length of the tire contact area (or of other parameters related to it), based on the fact that the higher the probability of finding the tire monitoring unit in correspondence of the tire contact area at a certain time during tire rolling, the higher the value of the length of the tire contact area relative to the length of the whole tire circumference.

For example, the Applicant perceived that the length $PL$ of the tire contact area ("patch length") could be estimated based on the tire circumference and on the probability $p$ of finding the tire monitoring unit in correspondence of the tire contact area at a certain time during tire rolling, by using the formula $PL = 2\pi R p$, wherein $R$ is a radius (e.g., a rolling radius) of the tire.

The Applicant surprisingly found that such statistical approach leads to a very precise estimation of the length of the tire contact area, and/or of other parameters related to tires, such as the load exerted by the vehicle on the tires. From this, the actual vehicle weight can be accurately estimated.

By using such a statistical approach, the Applicant hence found that it is advantageously possible to perform a real-time or substantially real-time tire monitoring using low-cost monitoring units operated at low frequency and with low power needs, without the need of providing complex hardware and software adapted for reconstructing a signal descriptive of the tire deformations and/or for recognizing the start and the end of peaks or valleys or other significant points of such signal.

From said real-time or substantially real-time tire monitoring, information about the actual load exerted by the vehicle on the tires can be derived, and thus the vehicle weight can be accurately estimated in real-time or substantially real-time. The estimated vehicle weight is then exploited in estimating the vehicle range for a route having certain route characteristics (or different possible routes having different route characteristics) for going from an origin to a destination.

Therefore, in preferred embodiments of the present invention, the estimation of the weight of the vehicle includes:

- associating a tire monitoring unit to at least one tire fitted to such vehicle, said tire monitoring unit including at least one sensing element adapted to generate a sensing signal descriptive of deformations undergone by said tire during rotation on a rolling surface, said deformations forming a contact area between said tire and said rolling surface;
- during the rotation of such at least one tire of the vehicle fitted with such monitoring unit, undersampling said sensing signal generated by said sensing element including the sensing signal generated in correspondence of passages of said sensing element through said contact area for a number of said passages sufficient for obtaining an estimated length of said contact area based on said undersampled sensing signal;
- estimating the weight of the vehicle based on such estimated length.

For the purposes of the present invention, "undersampling" the sensing signal (generated by the sensing element, including the sensing signal generated in correspondence of passages of the sensing element through the contact area) is to be intended to mean detecting "few points" corresponding to the passage of the sensing element through the contact area, wherein by detecting "few points" it is meant that the number of detected points is not per-se sufficient to reconstruct, not even approximately, a curve being descriptive of a signal representing an acceleration profile. Preferably, "few points" means from at least 0.5 points on average per tire roundtrip representative of the sensing element being in correspondence of the tire contact area to at most 5 points representative of the sensing element being in correspondence of the tire contact area on average per tire roundtrip. More preferably, "few points" means from at least 0.8 points on average per tire roundtrip representative of the sensing element being in correspondence of the tire contact area to 4 points representative of the sensing element being in correspondence of the tire contact area on average per tire roundtrip.

In other words, "undersampling" the sensing signal (generated by the sensing element, including the sensing signal generated in correspondence of passages of the sensing element through the contact area) means sampling the sensing signal at a sampling frequency such that, in a predetermined range of tire rotation speeds, the number of samples per tire roundtrip is not per-se sufficient to reconstruct, not even approximately, a curve being descriptive of a signal representing an acceleration profile. For example, a range of sampling frequency from 50 Hz to 1.5 KHz for a vehicle speed from 40 Km/h to 100 Km/h produces an undersampled sensing signal.

The "number of said passages sufficient for obtaining an estimated length of said contact area based on said undersampled sensing signal" is a number of passages sufficiently high to enable a statistical processing (statistical analysis) of the undersampled sensing signal.

At vehicle speeds in the range of 40 km/h - 100 km/h, a sampling frequency in the range from 50 Hz to 1.5 KHz enables performing a statistical analysis of the undersampled sensing signal in a fair amount of time.

In preferred embodiments, the sampling frequency is higher than about 150 Hz and lower than about 750 Hz. More preferably the sampling frequency is comprised in the range 150 Hz - 600 Hz.

The lower the sampling frequency, the lower the tire monitoring unit power consumption; preferred sampling frequency ranges may be selected in order to ensure that at least one sampling point representative of a passage of the tire monitoring unit in correspondence of the tire contact area is, on average, present in the acceleration measurement at least every two tire roundtrips (i.e., 0.5 points on average per tire roundtrip) for typical vehicle speeds, e.g., for a vehicle speed up to 100 km/h.

More preferably, sampling frequency ranges may be selected in order to ensure that at least an average of 0.8 sampling points representative of passages of the tire monitoring unit in correspondence of the tire contact area are present in the acceleration measurement per tire roundtrip, for typical vehicle speeds, e.g., for a vehicle speed up to 100 km/h.

Even more preferably, sampling frequency ranges may be selected in order to ensure that at least an average of one sampling point representative of a passage of the tire monitoring unit in correspondence of the tire contact area is present in the acceleration measurement per tire roundtrip, for typical vehicle speeds, e.g., for a vehicle speed up to 100 km/h.

For each sample of said undersampled sensing signal, it can be determined whether the sample has a value (e.g., acceleration value) representative of a passage of said sensing element in correspondence of said contact area, so as to obtain a first number of samples representative of passages of said sensing element in correspondence of said contact area within an amount of time corresponding to said number of said passages. The first number indicates how many times the sensing element has passed in correspondence of the tire contact area within an amount of time corresponding to said number of said passages.

In an embodiment, a set of samples of the undersampled sensing signal representative of passages of said sensing element in correspondence of the tire contact area can be extracted from a sequence of samples of the undersampled sensing signal, so as to obtain the above mentioned first number.

To obtain the first number, said sequence of samples can be either processed (with suitable software/firmware modules) within the tire monitoring unit or transmitted to a controlling unit external to the tire to which the tire monitoring unit is associated/secured.

Preferably, an overall number of samples of the undersampled sensing signal can be determined, based on the sampling frequency and said amount of time.

In particular, said overall number of samples can be obtained as the product of said sampling frequency and said amount of time. In this way memory of the tire monitoring unit and/or calculation time can be saved.

The estimation of the length of the tire contact area may be performed based on said first number of samples and said overall number of samples (e.g., based on the ratio of the first number of samples and the overall number of samples).

The Applicant has also found that power consumption of the tire monitoring unit can be further optimized by interrupting the undersampling of the sensing signal during a switch off time so as to further decrease power consumption and increase battery lifetime.

This is feasible by determining a second number of "virtual" samples of the sensing signal, that should be performed during said switch off time, but that are actually not performed, which can be estimated based on the sampling frequency and the switch off time, for example as the product of the sampling frequency and said switch off time.

The overall number of samples can be thus composed by the sum of a number of actual samples (including the first number of samples) and said second number of virtual samples.

The duration of the switch off time is lower than the amount of time corresponding to said number of said passages and may be selected in such a way as an actual sampling of the sensing signal performed during the switch off time would include only samples representative of the passage of the tire monitoring unit outside the tire contact area. In this way, since such "virtual" samples do not contribute to the first number and can be determined based on the sampling frequency and the duration of the switch off time, their actual obtainment can be avoided, so as to save power.

Preferably said switch off time can be set in the range between one third and three quarters of the roundtrip time.

In preferred embodiments, the undersampling of the sensing signal can be interrupted after occurrence of a sample related with a passage of said sensing element in correspondence of said contact area, in other words, after at least one sample of the sensing signal is obtained which is related to a passage of the tire monitoring unit in correspondence of the tire contact area.

The undersampling of the sensing signal is then started again after the switch off time. In a more preferred embodiment, the interruption of the undersampling of the sensing signal may be triggered by the occurrence of a sample representative of a passage of the tire monitoring unit in correspondence of the tire contact area and a consecutive sample representative of a passage of the tire monitoring unit outside the tire contact area. In this way the chances of including samples representative of passages of the tire monitoring unit in correspondence of the tire contact area within said switch off time are reduced.

In another preferred embodiment said switch off time can be adjusted in response to variations of a rotation speed of said tire. In this way power consumption can be further optimized and the chances of including samples representative of passages of the tire monitoring unit in correspondence of the tire contact area within said switch off time can be further reduced.

The variation of the tire rotation speed can be communicated to the tire monitoring unit by a controlling unit external to the tire or can be detected by the tire monitoring unit itself, for example based on the time difference between two consecutive passages of the tire monitoring unit in correspondence of the tire contact area.

In preferred embodiments, the determination of whether a sample of the sensing signal has a value representative of a passage of the tire monitoring unit in correspondence of the tire contact area is performed by defining a threshold value and comparing the value of said sample with said threshold value. The above-mentioned first number of samples can be obtained by extracting from a sequence of samples of the undersampled sensing signal a set of samples by selecting samples out of said sequence of samples based on a comparison with said threshold value.

For example, in the case of a radial acceleration profile the threshold value can be set as $V^2/(2R)$, wherein V is the vehicle speed and R is a tire radius. In other words, it is possible to consider as representative of the tire monitoring unit passage in correspondence of the tire contact area only those samples whose absolute value of radial acceleration is lower than one half of the centripetal/centrifugal acceleration to which the tire monitoring unit is subjected during rotation outside the tire contact area.

It is understood that if other quantities descriptive of the tire deformation are used instead of radial acceleration, threshold value and comparison criteria (value lower or higher than the threshold) can vary accordingly.

In a further preferred embodiment the threshold can be set to an initial value before starting the undersampling of the sensing signal, and then it can be adjusted, for example in response to variations of the rotation speed of the tire.

Threshold adaptation with tire rotational speed allows reducing occurrence of possible errors in determining whether a sample is representative of a passage of the tire monitoring unit in correspondence of the tire contact area, ultimately increasing the precision and the accuracy of the estimation of the parameters related to the tires.

For example, when said measured quantity is the radial acceleration, the absolute value of said threshold is increased upon tire rotational speed increasing and viceversa.

In a further preferred embodiment, at least the initial value of the threshold is communicated to the tire monitoring unit from a controlling unit external to said tire.

This is particularly convenient for those tire monitoring units with a low degree of hardware complexity comprising a minimal amount of hardware. In such cases, part of the processing can be carried out in a processing unit of the controlling unit external to said tire, to which data are transmitted.

In another preferred embodiment the controlling unit communicates not only the initial value of the threshold but also the subsequent values of said threshold, adjusted in response to variation of tire rotation speed.

In preferred embodiments, the tire monitoring unit is secured to a crown portion of said tire, more preferably to an inner surface of the tire.

In preferred embodiments, the at least one sensing element is adapted to measure at least a radial acceleration of said crown portion during rotation of said tire.

Securing the tire monitoring unit to a crown portion of a tire, close to, or even embedded in, the tire tread, is advantageous since it is easier to measure a quantity descriptive of tire deformations, and thus more precisely identifying the occurrences of passages of the tire monitoring unit in correspondence of the tire contact area.

As previously noticed, among tire's parameters to be monitored during tire rolling, the length of the tire contact area is one of the most challenging to be estimated and at the same time is one of the most useful since it may be used in the determination of other tire related parameters, such as the load exerted by the vehicle on a tire, from which the overall vehicle weight can be dynamically estimated. The dynamic estimation of the vehicle weight can then be used to select the vehicle route.

The Applicant has found that the first number and the overall number of samples (or other number describing the whole statistic set of measurements derivable from the sampling frequency and the amount of time) can be directly used to estimate the probability of finding the tire monitoring unit in correspondence of the tire contact area. A length of the tire contact area can be estimated based on those numbers, for example as the product of the tire circumference and the ratio between said first number and said overall number of samples.

It could be convenient to include tire pressure and/or tire temperature sensing elements within the monitoring unit. This minimizes hardware complexity and/or eliminates the need of communication between a plurality of tire monitoring units secured to different portions of the tire or to the wheel.

Tire pressure together with the estimated length of the tire contact area can advantageously be used to estimate tire load. For example, the load Fz exerted by the vehicle on the tire can be calculated from the estimated length of the tire contact area based on a polynomial fitting function of degree at least one of the tire contact area length, e.g. by using the following formula i) or formula *ii)* below:

$$ Fz = A(P) \; + B(P) * PL \qquad i) $$

$$ Fz = A(P) \; + B(P) * PL + C(P) * PL^2 \quad ii) $$

wherein P is the tire pressure, *PL* is the length of the tire contact area and *A, B,* C are calibration parameters depending on the tire pressure P, whose values can be obtained by a calibration performed for the tire model to which the tire monitoring unit is to be associated. Calibration can be performed by using conventional testing machines on which a tire inflated at a controlled pressure and temperature is rotated over a conveyor belt under controlled conditions of exerted load and rotation speed.

In a more preferred embodiment, the load Fz exerted by the vehicle on the tire can be more precisely calculated from the estimated tire contact area length based on a polynomial function of the tire contact area length wherein the coefficients of said polynomial function further depend on tire pressure, temperature and rotation speed, e.g., according to the following formula *iii)* or formula *v)* below:

$$ Fz = A(P, \omega, T) \; + B(P, \omega, T) * PL \qquad iii) $$

$$ Fz = A(P, \omega, T) \; + B(P, \omega, T) * PL + C(P, \omega, T) * PL^2 \qquad iv) $$

wherein P is the tire pressure, *T* is the tire temperature, *PL* is the length of the tire contact area, $\omega$ is the tire rotational speed and A(P,$\omega$,T), B(P,$\omega$,T), C(P,$\omega$,T) are calibration parameters depending on the tire pressure, tire rotation speed and tire temperature.

The Applicant has further noticed that the present invention leads to a more precise outcome if it is carried out in a way that during the measurement the kinematic and/or dynamic conditions acting on a tire do not undergo a substantial variation, i.e., in linear or quasi linear running conditions.

In preferred embodiments, the undersampling of the sensing signal is started when at least one of the following access conditions is met:

- a speed of the vehicle is comprised within a predetermined speed range, preferably within about 40 km/h and about 100 km/h, more preferably within about 60 km/h and about 80 km/h,
- an absolute value of longitudinal acceleration (i.e., the acceleration in the same direction of motion of the vehicle) of the vehicle is lower than a predetermined amount, preferably below about 0.3 m/s$^2$.

In more preferred embodiments, a further access condition to be met may be provided, by which an absolute value of lateral acceleration (i.e., the acceleration in a direction perpendicular to the direction of motion of the vehicle) of the vehicle is lower than a predetermined amount, preferably below about 0.3 m/s$^2$.

As previously discussed, the present invention relies on the accumulation of a statistical set of samples obtained over a sufficiently high number of tire roundtrips performed by the tire during rolling in an amount of time.

In preferred embodiments, the present invention further comprises stopping the undersampling of the sensing signal when said amount of time exceeds a predetermined maximum amount of time. Preferably said maximum amount of time may be comprised between about 5 seconds and about 30 seconds, more preferably said maximum amount of time is comprised between about 10 seconds and about 20 seconds.

It is thus worthy to notice that the present invention makes possible a real time or substantially real time estimation of the tire contact area length, and thus of the vehicle weight.

Further stopping conditions may be defined, for example to track that the kinematic or dynamic conditions are changing, or have changed, to an extent not compatible with the accuracy requested by the vehicle control system.

For example, in preferred embodiments, the present invention further comprises stopping the undersampling of the sensing signal when at least one of the following stopping conditions is met:

- an absolute value of longitudinal acceleration of the vehicle exceeds a predetermined acceleration threshold, preferably about 0.3 m/s2,
- a speed of the vehicle is outside a predetermined speed range, preferably below about 40 km/h or preferably above about 100 km/h.

A further stopping condition to be met may be provided, by which an absolute value of lateral acceleration of the vehicle is higher than a predetermined amount, preferably the absolute value of lateral acceleration of said vehicle is higher than about 0.3 m/s$^2$.

In further embodiments, one or more of the above stopping conditions may be used to discard at least one subset of the sensing signal samples. For example, the samples can be taken by the tire monitoring unit in a predefined amount of time, and if it is evaluated that during said predefined amount of time one or more of the above stopping conditions have been met, the whole set of samples is discarded and the tire contact area length is not estimated.

The tire monitoring unit advantageously comprises a transmitting and/or a receiving section to communicate with a controlling unit external to said tire. The samples of the sensing signal and/or the estimated tire contact area length can be communicated by the tire monitoring unit to the controlling unit. Those data may be then be exploited to estimate the vehicle weight and to select a route.

Brief description of the drawings

The above-mentioned features and advantages of the present invention, as well as other features and advantages, will be made apparent by the following detailed description of exemplary and non-limitative embodiments thereof. In the following description, reference will be made to the annexed drawings, wherein:

**Fig. 1,** already discussed in the foregoing, shows radial acceleration versus time for three consecutive tire round trips measured at 250 Hz sampling frequency.

**Fig. 2,** already discussed in the foregoing, shows radial acceleration versus time for a high number of consecutive tire round trips measured at 250 Hz sampling frequency.

**Fig. 3** shows a monitoring unit fitted into a tire.

**Fig. 4** shows a scheme of a monitoring unit according to an embodiment of the invention.

**Fig. 5** shows a scheme of a vehicle comprising a tire monitoring system and a vehicle control system according to an embodiment of the invention.

**Fig. 6** shows a scheme of a controlling unit according to an embodiment of the invention, and

**Figs. 7** - **10** schematically show examples of the main actions performed by the embodiments of the method and system of the invention.

Detailed description of exemplary embodiments of the invention

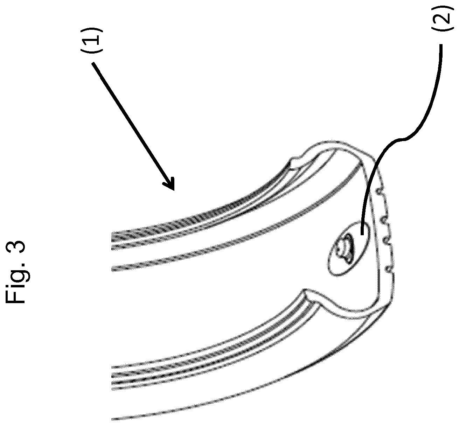

Reference is made to **Fig. 3** showing a portion of a tire (1) comprising a tire monitoring unit **(2).**

The tire monitoring unit **(2)** is secured to a crown portion of the tire **(1),** preferably substantially in correspondence of the equatorial plane of the tire. In particular, the tire monitoring unit **(2)** may be glued or connected via an adhesive tape to the inner liner of the tire.

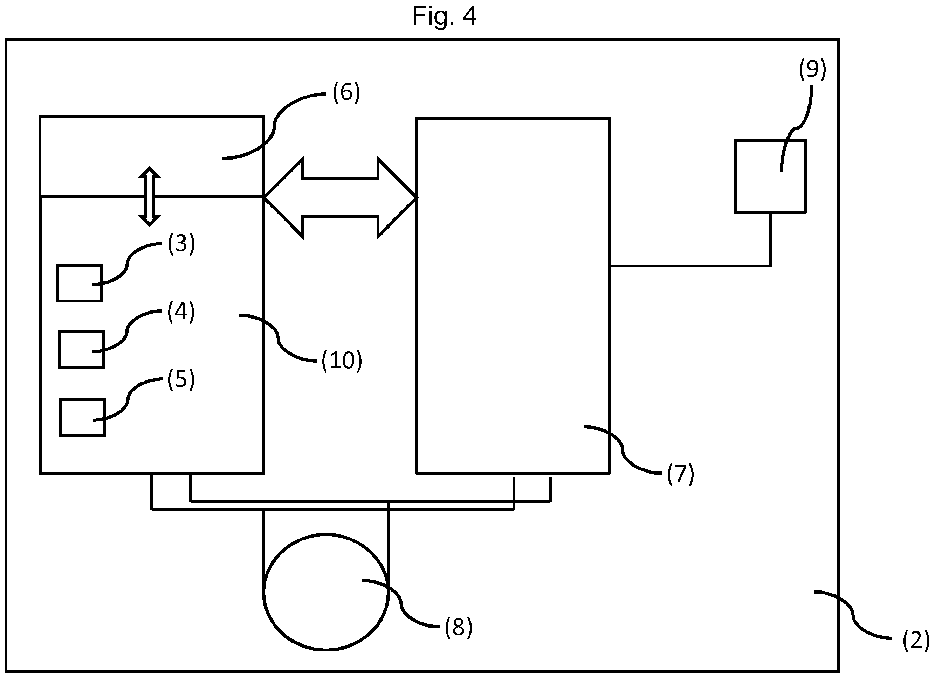

With reference to **Fig. 4,** the tire monitoring unit **(2)** comprises a sensing section **(10),** a source of electrical power comprising a battery **(8),** a processing unit (central processing unit or CPU) **(6)** associated with a memory (which, for the purposes of the present description, can be considered embedded in the CPU **(6)),** a transceiver **(7),** an antenna **(9).**

The sensing section **(10)** comprises a radial accelerometer **(3)** oriented within the monitoring unit **(2)** so as to have an axis substantially orthogonal to the inner surface of the tire. The radial accelerometer **(3)** is a sensing element configured to generate a sensing signal descriptive of deformations in radial direction which said tire **(1)** undergoes during rolling on a rolling surface (e.g., a road surface). Other sensing elements adapted for measuring physical quantities descriptive of tire deformations could be used, such as tangential accelerometers, lateral accelerometers, strain gauges, etc. Particularly, although not limitatively, the tire monitoring unit **(2)** is adapted to sample the sensing signal at a low sampling frequency, e.g., a sampling frequency lower than 1-1.5 kHz.

The sensing section **(10)** of said monitoring unit **(2)** preferably further comprises a pressure sensor **(4)** and a temperature sensor **(5)** configured to output respectively a measurement of the pressure internal to the tire **(1)** and of the temperature of the tire **(1).**

The CPU **(6)** is configured, via suitable software/firmware modules, to receive, from the sensing section **(10),** the sensing signal generated by the radial accelerometer **(3)** and data related to the measurements performed by the temperature and pressure sensors **(4, 5).** The CPU **(6)** is also configured to sample the sensing signal generated by the radial accelerometer **(3)** at a sampling frequency, so as to obtain a sequence of samples of the sensing signal. The CPU **(6)** is further configured, via suitable software/firmware modules, to process the data received from said accelerometer and sensors **(3, 4, 5)** in order to estimate, from said data, tire-related parameters, particularly the length of the tire contact area and/or the load exerted on the tire by a vehicle to which the tire **(1)** is fitted. Alternatively, the CPU **(6)** can be configured, via suitable software/firmware modules, to process said data up to a certain extent, i.e., to perform only part of the processing, and then to send the processing results to an external controlling unit, via the transceiver **(7)** and the antenna **(9),** to complete the processing up to the estimation of said tire-related parameters. The CPU **(6)** may be also configured, via suitable software/firmware modules, to receive access and/or stopping conditions from the external controlling unit. The access conditions may be used by the CPU **(6)** as a trigger to command the sensing section **(10)** to start the measurements needed for the estimation of the tire-related parameters, and/or to start the processing needed for the estimation of the tire-related parameters. The stopping conditions may be used by the CPU **(6)** as a trigger to stop or suspend the measurements performed by the sensing section **(10),** and/or to stop or suspend the processing needed for the estimation of the tire-related parameters.

The transceiver section **(7)** is configured for bidirectional communication via the RF antenna **(9)** with an external controlling unit specifically configured for communication with the tire monitoring units **(2)** comprised within the tires of a vehicle. Alternatively, the transceiver section **(7)** can directly communicate, via the RF antenna **(9),** with a vehicle control system (not depicted in **Fig. 4),** such as a vehicle board computer of the vehicle to which the tire **(1)** is fitted. In preferred embodiments, the transceiver **(7)** comprises a Bluetooth Low Energy (BLE) module.

The battery **(8)** directly or indirectly feeds electrical power to the various components of the monitoring unit **(2).** In preferred embodiments, the battery can be a rechargeable battery, rechargeable with power scavenged (by an energy scavenger) from mechanical energy caused by tire rotation.

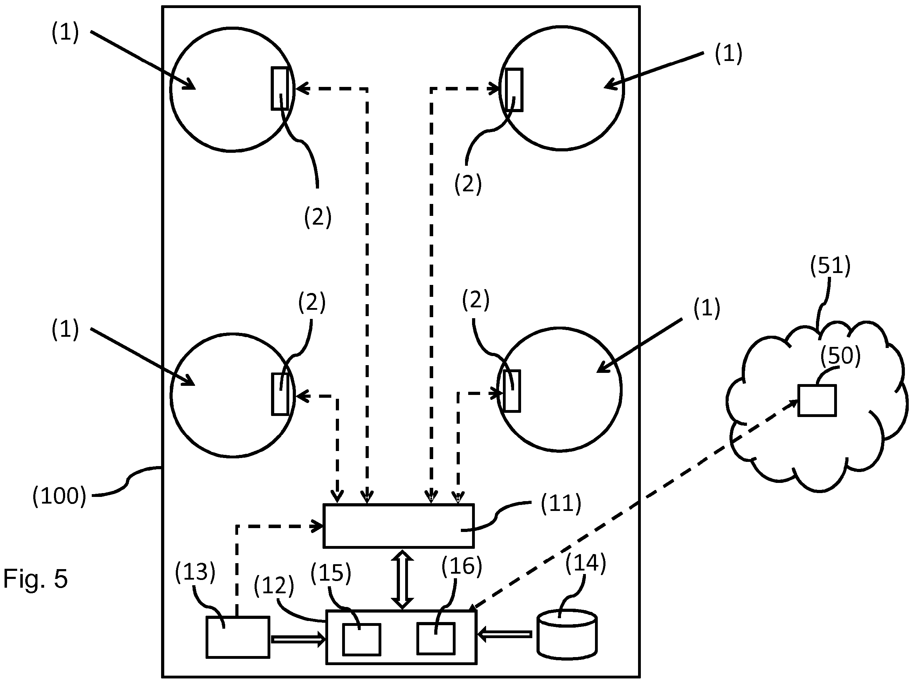

**Fig. 5** schematically shows an embodiment of a system for monitoring tires. The system is implemented in a vehicle **(100)** fitted with four tires **(1),** each of which comprising a respective tire monitoring unit **(2).** The vehicle **(100)** may be for example a car or a commercial vehicle like a van or a truck. However, the present invention applies in general to vehicles like two or three wheeler scoters, motorbikes, tractors, buses, trucks or light trucks, i.e., to vehicles with two, three, four, six or more wheels distributed on two or more axles. The vehicle **(100)** can be driven by electrical power or relying on thermal propulsion (internal combustion engine) or it can be a hybrid vehicle.

The tire monitoring units **(2)** in the tires **(1)** are in communication with a controlling unit **(11).** The controlling unit **(11)** is in communication with a vehicle control system **(12).**

The vehicle control system **(12)** can be adjusted to send messages indicating a route for going from an origin to a destination (and/or listing possible alternative vehicle routes for going from the origin to the destination and, possibly, recommending the best route to select among the alternative routes). The vehicle control system **(12)** is interfaced with a vehicle positioning system **(13),** for example a satellite positioning system like the GPS, Galileo or GLONASS. In other embodiments, the vehicle positioning system **(13)** may be incorporated in the vehicle control system **(12).** The vehicle control system **(12)** is also interfaced with a database **(14)** storing roadway maps with vehicle routes and characteristics of the vehicle routes, possibly along with other data like traffic data and weather conditions data. The vehicle control system **(12)** includes a user interface comprising for example user input means **(15)** and a display **(16);** the user input means **(15)** of the user interface can be a touch screen of the display **(16).** The vehicle control system **(12)** comprises a navigation module configured to calculate and provide (e.g., on the display **(16))** navigation information, based on the vehicle position data received from the vehicle positioning system **(13)** and the roadway maps available in the database **(14).**

In particular, the vehicle control system **(12)** is configured for calculating and proposing to the vehicle's driver a vehicle route for going from an origin to a destination, possibly two or more alternative vehicle routes for going from the origin to the destination. The origin and/or the destination can be inputted by the vehicle driver (or by any of the vehicle occupants) through the user input means **(15)** of the user interface. The vehicle control system **(12)** is configured to calculate an estimated vehicle range in respect of the calculated vehicle route for going from the origin to the destination (possibly to calculate estimated vehicles ranges in respect of the different alternative vehicle routes for going from the origin to the destination). The vehicle control system **(12)** can be configured to calculate the estimated the vehicle range based on the route characteristics stored in the database **(14)** and a real-time or substantially real-time estimation of the vehicle weight. The estimation of the vehicle weight can be based on the estimated tire-related parameters, particularly the estimated length of the tire contact area and/or the estimated load exerted by the vehicle on the tires, estimated by the tire monitoring units **(2)** and/or by the controlling unit **(11).**

The vehicle control system **(12)** may be in communication with a source of information about road traffic conditions and/or weather conditions/forecasts. For example, the source of traffic and/or weather conditions information may be a remote server **(50),** for example in the cloud **(51).** The information about road traffic conditions and/or weather conditions/forecasts, received from the remote server **(50),** can be stored in the database **(14).**

Typically, the communication between the tire monitoring units **(2)** and the controlling unit **(11)** is a wireless communication (e.g., a Bluetooth communication). The communication between the controlling unit **(11)** and the vehicle control system **(12)** can be wireless and/or wired (e.g., on a CAN BUS). In other preferred embodiments, the controlling unit **(11)** can be a hardware or software module implemented in the vehicle control system **(12).**

The controlling unit **(11)** is external with respect to the tires **(1)** wherein the tire monitoring units **(2)** are secured. The controlling unit **(11)** can be placed in any location inside the vehicle which can be reached by the wireless (e.g., Bluetooth) signal transmitted by the tire monitoring units **(2).**

For example, the controlling unit **(11)** can be a box attached to the vehicle windshield. In other embodiments, the controlling unit **(11)** can be a mobile personal device of the vehicle driver (e.g., a smartphone or a tablet), provided with suitable software applications/modules configured at least for communication with the tire monitoring units **(2)** and with the vehicle control system **(12),** as well as for processing data received from the tire monitoring units **(2)** and for providing processed data to the vehicle control system **(12).**

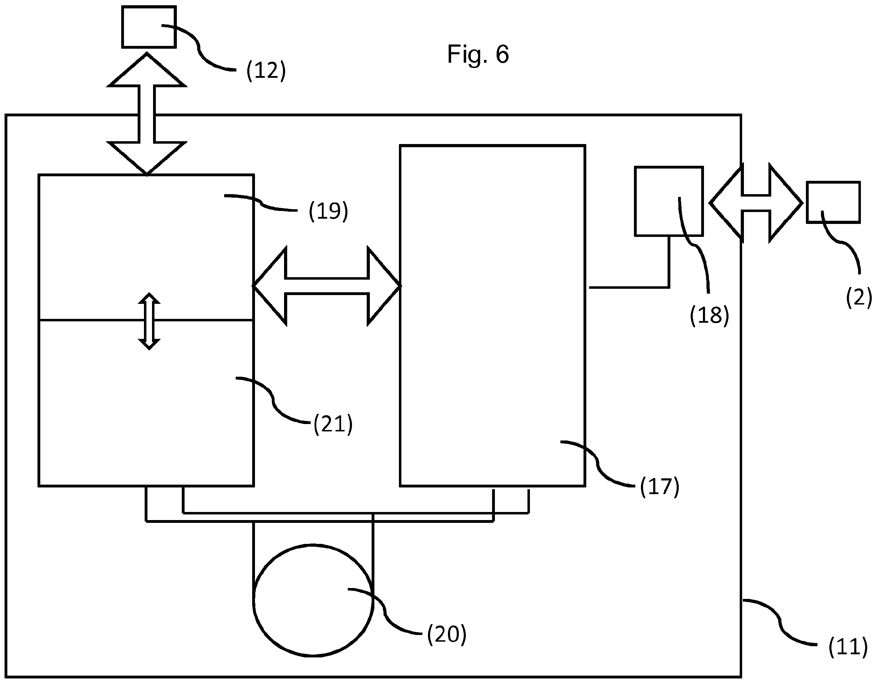

**Fig. 6** schematically shows an embodiment of a controlling unit **(11)** suitable for the system for monitoring tires of **Fig. 5.** The controlling unit **(11)** comprises a transceiver section **(17),** an RF antenna **(18),** an interface **(19)** to the vehicle control system **(12),** a battery **(20),** a processing unit **(21)** associated with a memory. The controlling unit **(11)** may use data provided by an external positioning system, e.g. a GPS, Galileo or GLONASS unit, for example a GPS unit on the vehicle (e.g., a GPS unit incorporated in the vehicle control system **(12)** or in the satellite positioning system **(13)** provided in the vehicle) or in a mobile personal device of the vehicle driver, such as a smartphone or a tablet. In embodiments, the controlling unit **(11)** may also incorporate a satellite positioning system.

The transceiver section **(17)** of the controlling unit **(11)** is configured for bidirectional communication via the RF antenna **(18)** with the tire monitoring units **(2).** In preferred embodiments, the transceiver section **(17)** comprises a Bluetooth Low Energy (BLE) module.

The interface **(19)** can be a CAN BUS interface adapted for bidirectional communication with the vehicle control system **(12).**

The battery **(20)** directly or indirectly feeds electrical power to the various components of the controlling unit **(11).** In other embodiments, the controlling unit **(11)** can be powered by the vehicle battery, via the interface **(19).**

The processing unit **(21)** (e.g., a CPU) of the controlling unit **(11)** is configured, via suitable software/firmware modules, to receive data from the tire monitoring units **(2)** comprised within the tires. Such data may comprise tire-related parameters estimated by the tire monitoring units **(2),** particularly an estimated length of the tire contact area with the rolling surface and/or an estimated load exerted by the vehicle on the tires, or measurements performed by the tire monitoring units **(2),** or results of partial processing performed on said measurements by the tire monitoring units **(2).** The processing unit **(21)** is also configured, via suitable software/firmware modules, to process such data in order to estimate at least one tire-related parameter, particularly the length of the tire contact area and/or the load exerted by the vehicle on the tires. The processing unit **(21)** may be also configured, via suitable software/firmware modules, to monitor access and/or stopping conditions to be applied for triggering starting and/or stopping/suspending the estimation of the tire-related parameter(s), and/or possibly discarding those samples of the sensing signal taken during acquisitions occurred within time intervals in which those access conditions were not met.

Ultimately the choice of whether distributing the processing between the tire monitoring units **(2)** and the controlling unit **(11)** for the tire-related parameter estimation is a trade-off between several constraints to be balanced, such as: hardware complexity, battery consumption, cost, processing power available to the CPU of the tire monitoring units, etc. In the preferred embodiment shown in **Fig.** 6, the tire-related parameter or parameters estimated by the CPU **(6)** of the tire monitoring units **(2)** and/or by the processing unit **(21)** of the controlling unit **(11)** is/are eventually made available to the vehicle control system **(12)** via the interface **(19).**

Referring also to **Fig. 5,** in an exemplary operation mode, each tire **(1)** fitted to a wheel of the vehicle **(100)** is caused to rotate on a rolling surface (e.g., the road surface) during the vehicle run. As a consequence of the vehicle weight, the tire is deformed so as to form a contact area (patch) between the tire **(1)** and the rolling surface. Each tire monitoring unit **(2)** comprised within a tire **(1)** is preferably paired with said tire, i.e., identifying information of the tire (e.g., tire identifier, tire size, tire model, tire radius etc.) is stored within the memory associated with the CPU **(6)** of the respective tire monitoring unit **(2).**

Pressure and temperature measurements can be performed by the tire monitoring unit **(2)** comprised within the tire **(1)** at discrete time intervals, for example every 30 seconds or upon request of the external controlling unit **(11)** at any time during tire rolling. The start of pressure and temperature measurement can be triggered based on a signal sent by the radial accelerometer **(3)** when the tire starts to rotate, or upon request from the external controlling unit **(11)** or the vehicle control system **(12).**

Preferably, the controlling unit **(11)** can monitor the vehicle status based on positioning data (e.g., GPS data), provided for example by the vehicle positioning system **(13).**

When the speed of the vehicle **(100)** is between 40 km/h and 100 km/h, (or more preferably within 60 km/h and 80 km/h) and/or when the absolute value of the longitudinal acceleration is lower than 0.3 $m/s^2$, the controlling unit **(11)** determines that the access conditions are met and communicates to each of the tire monitoring units **(2)** to start the sampling of the sensing signal generated by the radial accelerometer **(3)**, in order to start the estimation of the tire contact area length. A further access condition may be based on the check that the absolute value of the lateral acceleration of the vehicle is lower than 0.3 m/s$^2$.

The controlling unit **(11)** further communicates to each of the tire monitoring units **(2)** the speed $V$ of the vehicle so that said tire monitoring units **(2)** can set an initial absolute threshold value for the acceleration, e.g. as $V^2/(2R)$, wherein $R$ is a tire radius. Alternatively, the controlling unit **(11)** can communicate to said tire monitoring units **(2)** the initial value of said threshold.

The controlling unit **(11)** may also communicate the amount of time to be allocated for the measurements, or the overall number of accelerometer sensing signal samples to be taken. The amount of time or the overall number of accelerometer sensing signal samples can also be directly stored in the software/firmware of each tire monitoring unit **(2).** In particular, the amount of time should be long enough to encompass several complete tire roundtrips at the vehicle speeds of interest. For example, the amount of time can be of several seconds (e.g., 10 seconds).

When the measurement is started, the sensing signal generated by the radial accelerometer **(3),** which is a measure of the tire radial acceleration, is undersampled. Here we consider a sampling at 250 Hz. In this example, an overall number of at least one thousand of samples is taken within the allocated amount of time. Such a tire monitoring unit working at 250 Hz will take an overall number of 2,500 samples in 10 seconds.

During the sampling of the radial acceleration sensing signal, the value of each sample is compared with said threshold value in order to determine whether each sample value can be considered as representative of a passage of the tire monitoring unit in correspondence of the contact area between the tire and the rolling surface.

In case of having set the initial threshold value at $0.5 * V^2/R$, radial acceleration samples whose absolute value is lower than said threshold will be considered as representative of passages of the tire monitoring unit in correspondence of the tire contact area. In fact, as we said, when the tire monitoring unit **(2)** remains in correspondence of the tire contact area, the radial acceleration is substantially zero since the tire monitoring unit is locally moving on a substantial rectilinear path.

The threshold value, initially set as $V^2/(2R)$, can be changed in response to variation of the rotation speed of said tire **(1)**. The updated threshold value can be communicated by the controlling unit **(11)** to each of said tire monitoring units **(2)** or can be calculated by each tire monitoring unit **(2)** itself. In the latter case, an estimation of the rotation speed of the tire **(1)** can be carried out internally in each tire monitoring unit **(2)** by estimating the roundtrip time based on the time interval between consecutive samples or groups of samples having values lower than the set threshold. The estimated roundtrip time is used for obtaining the tire rotation speed and/or an updated speed of the vehicle, which can be used to update the threshold value.

The determination of whether a radial acceleration sample can be considered as representative of a passage of the tire monitoring unit **(2)** in correspondence of the tire contact area can be carried out on a sample by sample basis. Alternatively, a sequence of samples can be obtained, followed by an extraction from said sequence of samples of a set of samples having values representative of passages of the tire monitoring unit **(2)** in correspondence of the tire contact area.

In both the aforementioned cases, the occurrences of the samples having values representatives of passages of the tire monitoring unit **(2)** in correspondence of the tire contact area are counted by the CPU **(6)** of the tire monitoring unit **(2),** so as to obtain a first number of samples being representative of passages of the tire monitoring unit **(2)** in correspondence of the tire contact area. Preferably, the overall number of samples is also determined by counting the samples obtained. Alternatively, the overall number of samples can be directly obtained as the product of the sampling frequency and said amount of time, or the ratio between the amount of time and the sampling period (i.e., the inverse of the sampling frequency).

Said first number of samples (corresponding to passages of the tire monitoring unit **(2)** in correspondence of the tire contact area) can be used by the tire monitoring unit **(2)** to estimate at least one tire-related parameter, particularly the length of the tire contact area, or can be communicated to the controlling unit **(11)** or directly to the vehicle control system **(12).**

In particular, this first number of samples can be used for determining the probability of said tire monitoring unit **(2)** to be in correspondence of the tire contact area at a certain time, which can be calculated for example as the ratio between said first number of samples and said overall number of samples (2,500 measurements in this example).

Alternatively, said probability can be calculated as the ratio between the time spent by the tire monitoring unit **(2)** in correspondence of the tire contact area (i.e., the ratio between the first number of samples and the sampling frequency, or the product of the first number of samples and the sampling period) and said amount of time in which the measurement is carried out (10 seconds in this example).

To determine the overall number of samples, it is not really necessary to actually sample the radial acceleration sensing signal at each sampling period. Samples within tire roundtrips to be taken when the tire monitoring unit **(2)** is certainly not in correspondence of the tire contact area can be skipped and substituted by "virtual samples" which are not actually taken. In such case, the overall number of samples is determined as the sum of the number of actual samples taken and the number of virtual samples. Advantageously, this can result in a significant saving of the energy used by the battery **(8)** of the tire monitoring unit **(2)** for the estimation of the tire contact area length, ultimately increasing the lifespan of its battery **(8).**

The CPU **(6)** of the tire monitoring unit **(2)** can thus be configured, via suitable software/firmware modules, to switch off the sampling of the radial acceleration sensing signal during a switch off time comprised between two consecutive passages of said tire monitoring unit in correspondence of said tire contact area, i.e., within a roundtrip outside said tire contact area. Such software/firmware modules are also configured for determining the number of virtual samples (i.e., the number of samples not actually taken) based on the sampling frequency and said switch off time.

This is particularly convenient in the embodiment wherein the tire monitoring unit **(2)** calculates the time occurring between two consecutive round trips. In this case, said switch off time can be preferably set in the range between one third and three quarters of the roundtrip time.

At the expiring of a maximum amount time allocated for the sampling of the radial acceleration sensing signal, the external controlling unit **(11)** communicates each tire monitoring unit (2) to stop the sampling and to communicate their outcome, for example said first number of samples.

Alternatively, the external controlling unit **(11)** can communicate each tire monitoring unit **(2)** to stop the sampling when some stopping conditions are met, for example if the vehicle speed is outside a predetermined speed range or if an absolute value of the longitudinal acceleration exceeds a predetermined acceleration threshold.

Alternatively, the tire monitoring unit **(2)** itself can stop the sampling of the radial acceleration sensing signal at the expiring of the maximum amount of time, or, in the case wherein the tire monitoring unit **(2)** can estimate the vehicle speed, when at least one of the rotation/vehicle speed or the longitudinal acceleration is outside a predetermined range.

Once the sampling of the radial acceleration sensing signal is over, the following quantities are available to the tire monitoring system for the estimation of the tire contact area length: a first number of samples being representative of passages of said tire monitoring unit in correspondence of the tire contact area during the amount of time allocated for collecting the radial acceleration samples; an overall number of (actual and possibly virtual) samples, or its corresponding value calculated based on the sampling frequency and the amount of time allocated; tire pressure and/or tire temperature.

Based on such data, at least one tire-related parameter can be estimated. Particularly, the length of the tire contact area and/or the load exerted on the tire **(1)** by the vehicle can be estimated, as explained below.

As previously discussed, the tire-related parameter, particularly the length of the tire contact area and/or the load exerted on the tire **(1)** by the vehicle, can be estimated by said tire monitoring units **(2),** or by the external controlling unit **(11),** or by the vehicle control system **(12).**

For example, the CPUs **(6)** of the tire monitoring units **(2)** can process the acceleration data and send to the control unit **(11),** for each tire monitoring unit **(2),** the first number $N1$ of radial acceleration samples representative of passages of each tire monitoring unit in correspondence of the tire contact area, the overall number $N2$ of (actual and possibly virtual) radial acceleration samples, the tire pressure and the tire temperature values. The processing unit **(21)** of the controlling unit **(11)** can then estimate the length of the tire contact area and/or the load exerted by the vehicle on the tires based on such data. From the estimation of the length of the tire contact area and/or the load exerted on the tires by the vehicle, the processing unit **(21)** of the controlling unit **(11)** or the vehicle control system **(12)** can then estimate the vehicle weight.

In particular, based on the fact that the set of samples taken in the amount of time at the sampling frequency is a statistic set, the ratio $N1/N2$ corresponds to a probability $p$ of finding each tire monitoring unit in correspondence of the contact area of the respective tire at a certain time during tire rolling.

A length $PL$ of the tire contact area could be then estimated based on the tire circumference and such probability $p$, by using the formula:

$$PL = 2\,\pi\,R\,p = 2\,\pi\,R\,N1/N2$$

wherein $R$ is a radius (e.g., a rolling radius) of the tire.

The tire pressure and the length $PL$ of the tire contact area can be then used to estimate the load exerted by the vehicle on the tire.

For example, the load $Fz$ exerted by the vehicle on the tire can be calculated from the estimated length $PL$ of the tire contact area based on a polynomial fitting function of the tire contact area length $PL,$ e.g., by using the formulas:

$$Fz = A(P) + B(P) * PL$$

$$Fz = A(P) + B(P) * PL + C(P) * PL^2$$

wherein $P$ is the tire pressure, $PL$ is the length of the tire contact area and $A, B, C$ are calibration parameters depending on the tire pressure $P$, whose values can be obtained by a calibration performed for the tire model to which the tire monitoring unit is associated. The calibration can be performed by using conventional testing machines on which a tire inflated at a controlled pressure and temperature is rotated over a conveyor belt under controlled conditions of exerted load and rotation peed. Such calibration coefficients *A, B,* C could be stored in the memory of the tire monitoring unit, the controlling unit and/or communicated to the vehicle control system.

In a more preferred embodiment, the load *Fz* exerted by the vehicle on the tire can be more precisely calculated from the estimated tire contact area length *PL* based on a polynomial function of the tire contact area length *PL* wherein the coefficients of said polynomial function further depend on tire pressure and rotation speed, e.g., according to above mentioned formulas:

$$Fz = A(P,\omega,T) + B(P,\omega,T) * PL$$

$$Fz = A(P,\omega,T) + B(P,\omega,T) * PL + C(P,\omega,T) * PL^2$$

wherein P is the tire pressure, *PL* is the length of the tire contact area, $\omega$ is the tire rotational speed and $A(P,\omega,T)$, $B(P,\omega,T)$, $C(P,\omega,T)$ are calibration parameters depending on the tire pressure *P*, tire rotation speed $\omega$ and tire temperature *T*.

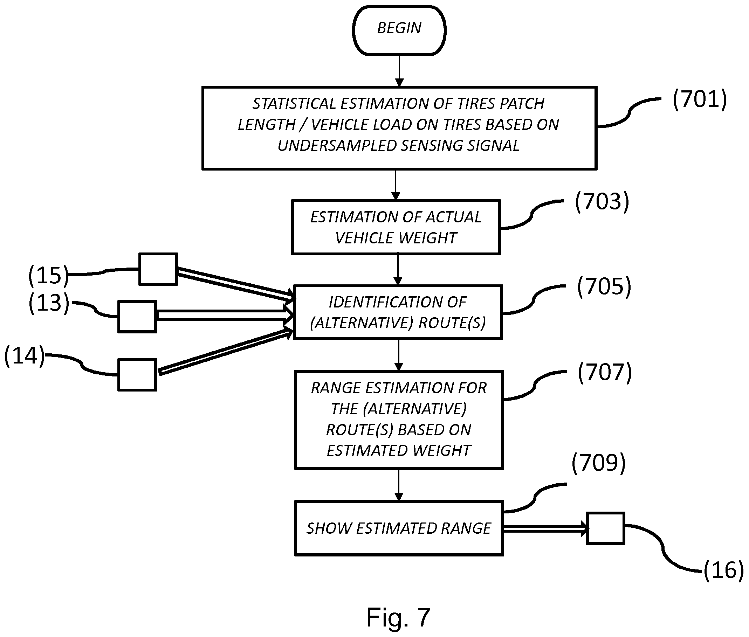

Referring to **Fig. 7,** once the at least one tire-related parameter, particularly the load *Fz* exerted by the vehicle on the tire, has been statistically estimated (block **(701)** in **Fig. 7),** the weight of the vehicle can be estimated (block **(703)** in **Fig. 7**). For example, considering a vehicle with two axles, each of which having two wheels (like a car), the vehicle weight can be estimated as the sum of the estimated load *Fz* exerted by the vehicle on each of the four tires.

It should be understood that the above described estimation of the vehicle weight based on a statistical approach for the estimation of the length of the tire contact area, although being particularly advantageous (and therefore preferable), does not preclude the possibility of adopting electronics adapted to sample the radial acceleration sensing signal at a sampling frequency sufficiently high to be able to reconstruct a curve being descriptive of a signal representing an acceleration profile, for example sampling frequencies up to 2 KHz or even 5 KHz.

Other methods and techniques for estimating the vehicle weight can be employed.

For example, load sensors in the form of load cells coupled to one or more suspension components of the vehicle can be used, as described in US 9,290,165. By measuring the stress, strain or weight on the load sensor a shifting of the load can be determined.

Another technique for estimating the vehicle weight can be based on a vehicle tire load sensing system as described in US 2015/032287, that includes distance sensors, e.g. ultrasonic distance sensors, mounted on the vehicle near each tire. The distance sensors generate distance signals representing a distance from the sensor to the surface.

After having estimated the vehicle weight, the vehicle control system **(12)** has available thereat an important information for the accurate estimation of the vehicle range.

For example, based on the estimation of the vehicle weight and on the data made available by the vehicle positioning system **(13)** and the roadways maps available in the database **(14),** which include route characteristics for the various vehicle routes, the vehicle control system **(12)** can determine a vehicle route for going from an origin (which can be the current vehicle position, provided by the vehicle positioning system **(13)** or be inputted manually by the vehicle driver through the user interface of the vehicle control system **(12))** to a destination (e.g., inputted manually by the vehicle driver) (block **705** in **Fig. 7)** and, based on the characteristics of such a vehicle route, estimate the range of the vehicle in case that route is taken to go from the origin to the destination (block **707** in **Fig. 7).** The vehicle control system **(12)** can then notify the vehicle driver of the estimated range (block **709** in **Fig. 7),** for example showing it on the display **(16)** and/or aurally. For example, the vehicle control system **(12)** can display (through the display **(16))** the indication of estimated range together with the information about the travel distance and the travel time for each of the alternative routes.

The vehicle control system **(12)** can optionally identify different possible alternative routes available for going from the origin to the destination. Based on the estimated weight and based on the knowledge of the routes characteristics of the different alternative routes available in the database **(14),** the vehicle control system **(12)** can estimate the vehicle range for the different alternative vehicle routes.

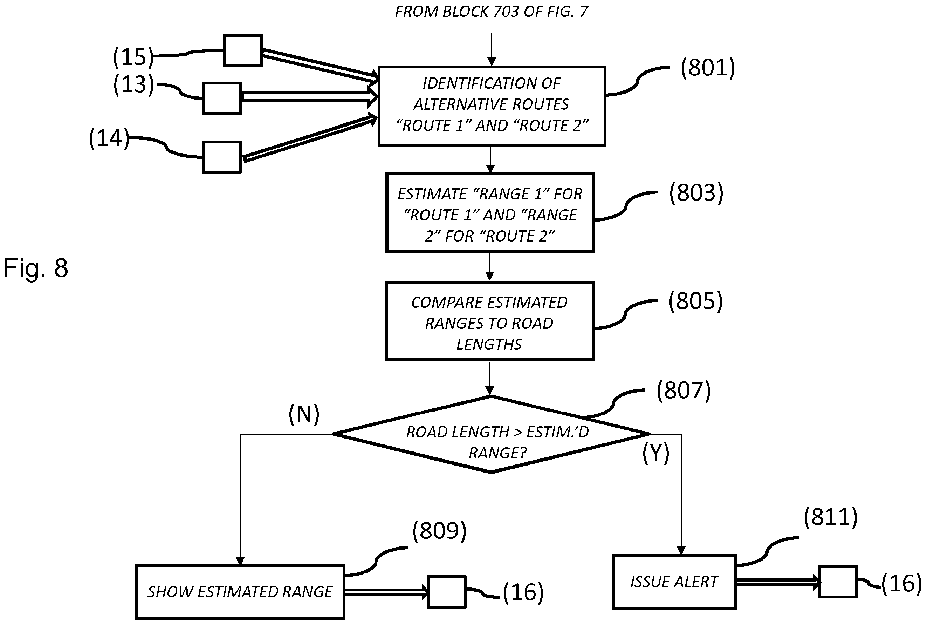

Referring to **Fig. 8,** let it be assumed for example that two routes, "route 1" and "route 2", are available for going from point *A* (origin) to point *B* (destination) (block **(801)** in **Fig. 8).** Based on the estimated vehicle weight and on the knowledge of routes characteristics available in the database **(14),** the vehicle control system **(12)** is able to estimate the different vehicles ranges ("range 1" and "range 2") of the vehicle for the two different routes "route 1" and "route 2" (block **(803)** in **Fig. 8).**

The vehicle control system **(12)** can then simply show to the vehicle driver the estimated range ("range 1" and "range 2") of the vehicle for the two different alternative routes "route 1" and "route 2", leaving it up to the vehicle driver to decide which route to take.

Or, the vehicle control system **(12)** can assess whether, for each of the alternative routes "route 1" and "route 2", the estimated range "range 1" and, respectively, "range 2" is sufficient for travelling the respective distance ("distance 1" for "route 1", "distance 2" for "route 2") for reaching the destination. This can be done e.g. by comparing, for each of the possible alternative routes, the respective estimated range to the respective route length (block **(805)** in **Fig. 8).** Then, in case neither "route 1" nor "route 2" has a respective route length higher than the respective estimated range (decision block **(807)** in **Fig. 8,** exit branch **(N)),** the vehicle control system **(12)** can simply show on the display **(16)** and/or aurally the different estimated ranges for the different routes. Otherwise, in case either "route 1" or "route 2" or both have a respective route length higher than the respective estimated range (decision block **(809)** in **Fig. 8,** exit branch (Y)), the vehicle control system **(12)** can issue an alert for the vehicle driver (block **(811)** in **Fig. 8.** For example, the alert issued by the vehicle control system **(12)** can be that, with the available fuel/energy, the vehicle does not have a sufficient range for travelling along "route 1", while the range could be sufficient for travelling along "route 2". The vehicle control system **(12)** can warn the vehicle driver that taking "route 1" might cause shortage of fuel/energy.

The route characteristics taken into consideration by the vehicle control system **(12)** in assessing which is the best route to take can include travel length of each possible route and additional important parameters related to the route, such as gradients and downhill slopes encountered along a route, which influence the fuel consumption/energy usage, degree of winding of the routes etc.. Referring again to the example of two routes, "route 1" and "route 2", available for going from point *A* to point *B,* and that along "route 1" substantial uphills/downhills are encountered, whereas "route 2" is essentially flat (despite possibly being longer in terms of travel distance), in presence of a relatively high estimated vehicle weight compared to the empty weight (meaning that the vehicle is heavily loaded) the vehicle control system **(12)** may estimate that the fuel/energy consumption for travelling along "route 1" is so high that the vehicle range (based on the available fuel/energy) is insufficient for reaching the intended destination. The vehicle control system **(12)** may thus recommend to the vehicle driver to take "route 2", so as to discourage the vehicle driver from taking a winding route or a route with substantial uphills/downhills.

For example, the vehicle control system **(12)** can estimate an initial, "standard" vehicle range of a certain vehicle route taking into account only the travel distance of said route, and then calculate and apply to the initially estimated standard range an adjustment factor which takes into account the estimated vehicle weight and other route characteristics such as the gradients of uphill/downhill route sections.

In the above, based on an accurate estimation of the vehicle weight and on the knowledge of the characteristics of the available routes, the vehicle control system **(12)** can suggest the vehicle driver which, among two or more alternative vehicle routes available for reaching a destination from an origin, is the better route, for reasons of safety: for example, when the weight is greater than a predetermined value, the vehicle control system will recommend the route with less uphills/downhils and/or the degree of windings or curves.

In estimating the vehicle range for each of the possible alternative routes, the vehicle control system **(12)** can also take into account information (provided by the remote server **(50))** about the current traffic conditions and/or weather conditions in respect of the alternative routes. Indeed, travelling along a route experiencing heavy traffic (or even traffic jams), and/or bad weather conditions, is expected to cause more fuel/energy consumption, thus the vehicle range is expediently adjusted taking account of this.

Optionally, the vehicle control system **(12)** can inform the remote server **(50)** of the route selected by the vehicle driver so as to enable the remote server **(50)** to keep the traffic conditions updated.

The vehicle control system **(12)** may not only provide to the vehicle driver information about the estimated range for the route (or the different alternative routes) for going from the origin to the destination, leaving the vehicle driver to then make his/her own decision: the vehicle control system **(12)** may automatically take certain actions.

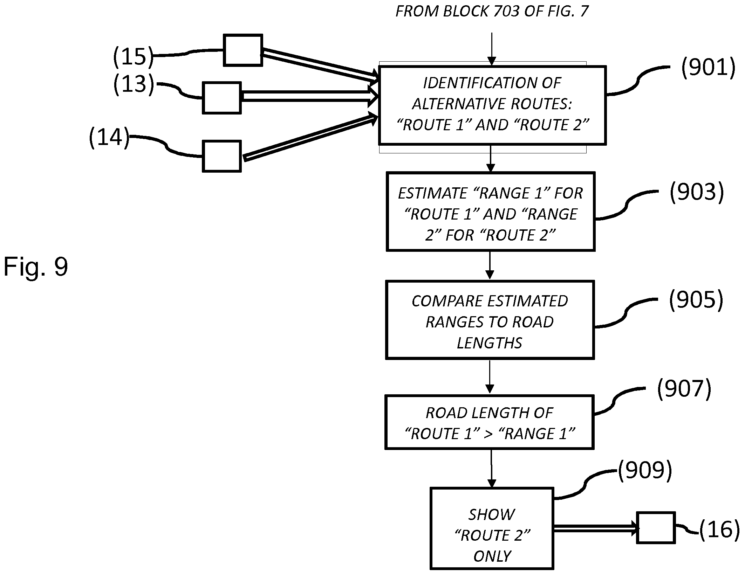

For example, referring to **Fig. 9,** assuming again that the vehicle control system **(12)** determines that two routes "route 1" and "route 2" are available for going from the origin to the destination (block **(901)** in **Fig. 9),** the vehicle control system **(12)** estimates the respective ranges "range 1" for "route 1" and "range 2" for "route 2" (block **(903)** in **Fig. 9)** and compares, for each of the possible alternative routes "route 1" and "route 2", the respective estimated range "range 1" for "route 1" and "range 2" for "route 2" to the respective route length (block **(905)** in **Fig. 9).** Let it be assumed that, as a result of the comparison, the length of "route 1" is assessed to be higher than the respective estimated range (block **(907)** in **Fig. 9):** then, the vehicle control system **(12)** can automatically delete "route 1" from the list of possible alternative routes for going from the origin to the destination, showing only "route 2" for which the estimated range is sufficient to cover the distance from the origin to the destination block **(909)** in **Fig. 9.** In this way, the vehicle driver is automatically prevented from taking "route 1" because such a route is not even shown in the list of possible alternative routes.

Optionally, the vehicle control system **(12)** can exploit information available in the database **(14)** to assess that even if the estimate range "range 1" for "route 1" is not sufficient for reaching the destination, along "route 1" there is one (or more) re-fuel stations (at a distance from the origin not higher than the estimated range "range 1"): in that case, the vehicle control system **(12)** may again include "route 1" in the list of available alternative routes for going from the origin to the destination, but with an associated alert informing the vehicle driver that in case he/she decides to take that route, he/she will have to stop at the re-fuel station for refuelling the vehicle.

In order to allow the vehicle driver to make an even more reasoned decision about which route to take for going from the origin to the destination, the vehicle control system **(12)** can show on the display **(16),** together with the list of alternative routes available and the respective estimated range (possibly with the warning in case for a route the estimate range is not sufficient for reaching the destination, and/or the indication of re-fuel stations along the route), information about route characteristics like how winding the route is, how many uphill/downhill sections there are, the route slope and so on.

The vehicle control system **(12)** may also take into account the drive style of the vehicle driver. It is known that modern vehicles allow the driver to set one among two or more drive style, such as "economy", "comfort", "sport" and the like. Each drive style has a different impact on the fuel/energy consumption of the vehicle.

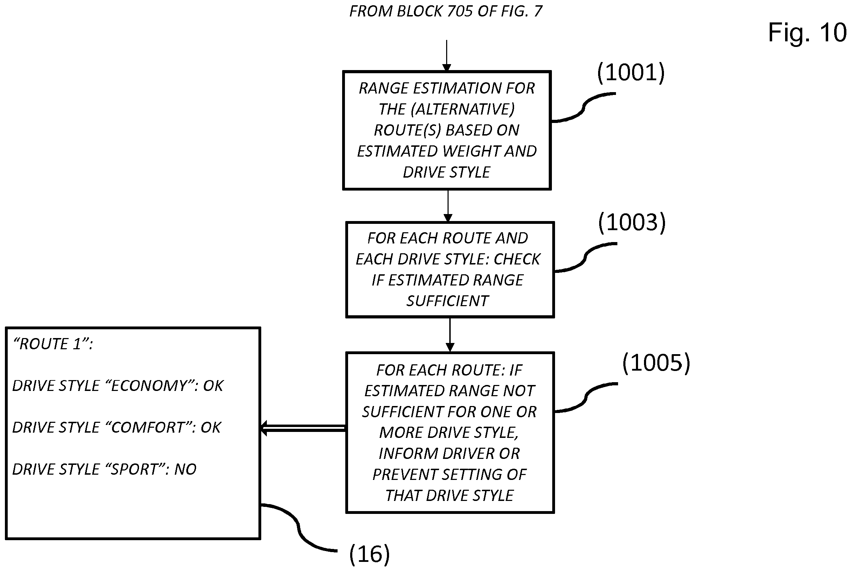

The vehicle control system **(12)** takes account of the impact of the different drive style on the fuel/energy consumption when estimating the vehicle range based on the vehicle weight. Referring for example to **Fig. 10,** after the estimation of the vehicle weight, in the step of estimation of the range for the one or more routes for going from the origin to the destination, the vehicle control system **(12)** exploits not only the estimated vehicle weight and the characteristics of the one or more routes available, but also the drive style. This may for example mean that if in the vehicle one of three different drive styles can be set (e.g., "economy", "comfort", "sport") each having a different impact on the fuel/energy consumption (e.g.: "economy" = low impact; "comfort" = medium impact; "sport" = high impact), three different estimated ranges are calculated for each one of the different possible routes available for going from the origin to the destination (block **(1001)** in **Fig. 10).** The vehicle control system **(12)** can then check, for each route and for each of the 3 drive styles, if the estimated range is sufficient for reaching the destination (block **(1003)** in **Fig. 10).** If the estimate range for a certain route and a certain drive style is not sufficient for reaching the destination, the vehicle control system **(12)** can inform the vehicle driver accordingly (discouraging him/her from setting a drive style having an energy/fuel consumption not compatible with the distance to be travelled along that route) and/or automatically preventing the setting of that drive style (block **(1005)** in **Fig. 10).**

## Claims

1. Method for selecting a route for a vehicle, comprising:

   a) associating a navigation module to a vehicle fitted with tires;
   b) estimating (703) a weight of the vehicle,
   c) identifying (705) at least one route for going from an origin to a destination;
   **characterized by** comprising
   d) calculating (1001) based on the estimated weight, for said at least one route, an estimated vehicle range for each one of a plurality of predefined drive styles that a vehicle driver is allowed to set;
   e) for said at least one route, assessing whether the estimated vehicle range for at least one of said plurality of predefined drive styles is sufficient for reaching the destination, and
   f) if the estimated vehicle range for said at least one of said plurality of predefined driver styles is not sufficient for reaching the destination, making the vehicle driver aware that said at least one of said plurality of predefined drive styles is not compatible with an available fuel/energy storage at the vehicle.

2. The method of claim 1, wherein in step d) said estimated vehicle range for said at least one route is also based on characteristics of said at least one route.

3. The method of claim 1 or 2, wherein said step f) of making the vehicle driver aware includes one among:

   notifying the vehicle driver that said at least one of said plurality of predefined drive styles is not compatible with an available fuel/energy storage at the vehicle, and
   preventing the selection of said at least one of said plurality of predefined drive styles which is not compatible with an available fuel/energy storage at the vehicle.

4. The method of claim 1, wherein in step c) said identifying at least one route for going from an origin to a destination includes identifying at least two alternative routes for going from an origin to a destination, and wherein step d), step e) and step f) are performed for each of said at least two alternative routes.

5. The method of claim 4, wherein said characteristics of the at least two alternative routes include information about the orography of the at least two alternative routes.

6. The method of claim 4 or 5, wherein said estimating a respective vehicle range for each of said at least two alternative routes includes exploiting information about weather conditions along the at least two alternative routes.

7. The method according to any one of the preceding claims 4 to 6, wherein said estimating a respective vehicle range for each of said at least two alternative routes includes taking into account traffic information about traffic conditions along the at least two alternative routes.

8. The method of any one of the preceding claims 4 to 7, further comprising receiving a vehicle driver selection of one of the at least two alternative routes and communicating remotely the driver selection to a traffic information server.

9. The method of any one of the preceding claims, wherein said estimating a weight of the vehicle comprises:

a1) associating a tire monitoring unit to at least one tire fitted to such vehicle, said tire monitoring unit including at least one sensing element adapted to generate a sensing signal descriptive of deformations undergone by said tire during rotation on a rolling surface, said deformations forming a contact area between said tire and said rolling surface;
a2) during the rotation of such at least one tire of the vehicle fitted with such monitoring unit, sampling said sensing signal generated by said sensing element including the sensing signal generated in correspondence of passages of said sensing element through said contact area;
a3) estimating the weight of the vehicle based on such estimated length.

10. The method of claim 9, wherein said sampling said sensing signal generated by said sensing element includes undersampling said sensing signal for a number of said passages sufficient for obtaining an estimated length of said contact area based on said undersampled sensing signal.

11. Method according to any of the previous claims wherein said estimating the weight of the vehicle comprises estimating a load exerted on said at least one tire by the vehicle, said load being estimated based on said estimated length of the contact area and a tire pressure.

12. System for estimating a range of a vehicle (100), the system including a navigation module and at least one processing unit including software modules being adapted to:

a) estimate a weight of the vehicle,
b) identify at least one route for going from an origin to a destination;
**characterized in that**

the at least one processing unit includes software modules being adapted to:

c) calculate based on the estimated weight, for said at least one route, an estimated vehicle range for each one of a plurality of predefined drive styles that a vehicle driver is allowed to set;
d) for said at least one route, assess whether the estimated vehicle range for at least one of said plurality of predefined drive styles is sufficient for reaching the destination, and
e) if the estimated vehicle range for said at least one of said plurality of predefined driver styles is not sufficient for reaching the destination, make the vehicle driver aware that at least one of said plurality of predefined drive styles is not compatible with an available fuel/energy storage at the vehicle.

13. The system of claim 12, wherein said software modules are adapted to make the vehicle driver aware that said at least one of said plurality of predefined drive styles is not compatible with an available fuel/energy storage at the vehicle by:

notifying the vehicle driver that at least one of said plurality of predefined drive styles is not compatible with an available fuel/energy storage at the vehicle, and
preventing the selection of said at least at least one of said plurality of predefined drive styles which is not compatible with an available fuel/energy storage at the vehicle.

**Patentansprüche**

1. Verfahren zum Auswählen einer Route für ein Fahrzeug, umfassend:

a) Zuordnen eines Navigationsmoduls zu einem Fahrzeug, das mit Reifen ausgestattet ist;
b) Schätzen (703) eines Gewichts des Fahrzeugs,

c) Identifizieren (705) von mindestens einer Route für den Weg von einem Ausgangsort zu einem Zielort;

**dadurch gekennzeichnet, dass** es Folgendes umfasst

d) Berechnen (1001) basierend auf dem geschätzten Gewicht, für die mindestens eine Route, einer geschätzten Fahrzeugreichweite für jeden einer Vielzahl von vordefinierten Fahrstilen, die ein Fahrzeugfahrer einstellen darf;
e) für die mindestens eine Route, Beurteilen, ob die geschätzte Fahrzeugreichweite für mindestens einen der Vielzahl von vordefinierten Fahrstilen ausreicht, um den Zielort zu erreichen, und
f) wenn die geschätzte Fahrzeugreichweite für den mindestens einen der Vielzahl von vordefinierten Fahrstilen nicht ausreicht, um den Zielort zu erreichen, Informieren des Fahrzeugfahrers, dass der mindestens eine der Vielzahl von vordefinierten Fahrstilen nicht mit einem verfügbaren Kraftstoff-/Energiespeicher am Fahrzeug kompatibel ist.

2. Verfahren nach Anspruch 1, wobei in Schritt d) die geschätzte Fahrzeugreichweite für die mindestens eine Route auch auf Merkmalen der mindestens einen Route basiert.

3. Verfahren nach Anspruch 1 oder 2, wobei der Schritt f) des Informierens des Fahrzeugfahrers eines beinhaltet von:

Benachrichtigen des Fahrzeugfahrers, dass der mindestens eine der Vielzahl von vordefinierten Fahrstilen nicht mit einem verfügbaren Kraftstoff-/Energiespeicher am Fahrzeug kompatibel ist, und
Verhindern der Auswahl des mindestens einen der Vielzahl von vordefinierten Fahrstilen, der nicht mit einem verfügbaren Kraftstoff-/Energiespeicher am Fahrzeug kompatibel ist.

4. Verfahren nach Anspruch 1, wobei in Schritt c) das Identifizieren von mindestens einer Route für den Weg von einem Ausgangsort zu einem Zielort Identifizieren von mindestens zwei alternativen Routen für den Weg von einem Ausgangsort zu einem Zielort beinhaltet, und wobei Schritt d), Schritt e) und Schritt f) für jede der mindestens zwei alternativen Routen durchgeführt werden.

5. Verfahren nach Anspruch 4, wobei die Merkmale der mindestens zwei alternativen Routen Informationen über die Orographie der mindestens zwei alternativen Routen beinhalten.

6. Verfahren nach Anspruch 4 oder 5, wobei das Schätzen einer jeweiligen Fahrzeugreichweite für jede der mindestens zwei alternativen Routen das Nutzen von Informationen über Wetterbedingungen entlang der mindestens zwei alternativen Routen beinhaltet.

7. Verfahren nach einem der vorstehenden Ansprüche 4 bis 6, wobei das Schätzen einer jeweiligen Fahrzeugreichweite für jede der mindestens zwei alternativen Routen das Berücksichtigen von Verkehrsinformationen über Verkehrsbedingungen entlang der mindestens zwei alternativen Routen beinhaltet.

8. Verfahren nach einem der vorstehenden Ansprüche 4 bis 7, weiter umfassend das Empfangen einer Fahrzeugfahrerauswahl von einer der mindestens zwei alternativen Routen und entferntes Kommunizieren der Fahrerauswahl an einen Verkehrsinformationsserver.

9. Verfahren nach einem der vorstehenden Ansprüche, wobei das Schätzen eines Gewichts des Fahrzeugs Folgendes umfasst:

a1) Zuordnen einer Reifenüberwachungseinheit zu mindestens einem Reifen, der an einem solchen Fahrzeug angebracht ist, wobei die Reifenüberwachungseinheit mindestens ein Sensorelement beinhaltet, das angepasst ist, um ein Sensorsignal zu erzeugen, das Verformungen beschreibt, denen der Reifen während Drehung auf einer Rollfläche unterzogen wird, wobei die Verformungen eine Kontaktfläche zwischen dem Reifen und der Rollfläche bilden;
a2) während der Drehung dieses mindestens einen Reifens des Fahrzeugs, der mit einer solchen Überwachungseinheit ausgestattet ist, Abtasten des von dem Sensorelement erzeugten Sensorsignals, einschließlich des Sensorsignals, das in Übereinstimmung mit Durchgängen des Sensorelements durch die Kontaktfläche erzeugt wird;
a3) Schätzen des Gewichts des Fahrzeugs basierend auf einer solchen geschätzten Länge.

10. Verfahren nach Anspruch 9, wobei das Abtasten des von dem Sensorelement erzeugten Sensorsignals eine Unterabtastung des Sensorsignals für eine Anzahl der Durchgänge beinhaltet, die ausreicht, um eine geschätzte Länge der Kontaktfläche basierend auf dem unterabgetasteten Sensorsignal zu erhalten.

11. Verfahren nach einem der vorstehenden Ansprüche, wobei das Schätzen des Gewichts des Fahrzeugs das Schätzen einer Last umfasst, die auf den mindestens einen Reifen durch das Fahrzeug ausgeübt wird, wobei die Last basierend auf der geschätzten Länge der Kontaktfläche und einem Reifendruck geschätzt wird.

12. System zum Schätzen einer Reichweite eines Fahrzeugs (100), wobei das System ein Navigationsmodul und mindestens eine Verarbeitungseinheit einschließlich Softwaremodulen beinhaltet, die angepasst sind, um:

a) ein Gewicht des Fahrzeugs zu schätzen,
b) mindestens eine Route für den Weg von einem Ausgangsort zu einem Zielort zu identifizieren;
**dadurch gekennzeichnet, dass**
die mindestens eine Verarbeitungseinheit Softwaremodule beinhaltet, die angepasst sind, um:
c) basierend auf dem geschätzten Gewicht für die mindestens eine Route eine geschätzte Fahrzeugreichweite für jeden einer Vielzahl von vordefinierten Fahrstilen zu berechnen, die ein Fahrzeugfahrer einstellen darf;
d) für die mindestens eine Route zu beurteilen, ob die geschätzte Fahrzeugreichweite für mindestens einen der Vielzahl von vordefinierten Fahrstilen ausreicht, um den Zielort zu erreichen, und
e) wenn die geschätzte Fahrzeugreichweite für den mindestens einen der Vielzahl von vordefinierten Fahrstilen nicht ausreicht, um den Zielort zu erreichen, den Fahrzeugfahrer zu informieren, dass mindestens einer der Vielzahl von vordefinierten Fahrstilen nicht mit einem verfügbaren Kraftstoff-/Energiespeicher am Fahrzeug kompatibel ist.

13. System nach Anspruch 12, wobei die Softwaremodule angepasst sind, um den Fahrzeugfahrer zu informieren, dass der mindestens eine der Vielzahl von vordefinierten Fahrstilen nicht mit einem verfügbaren Kraftstoff-/Energiespeicher am Fahrzeug kompatibel ist, durch:

Benachrichtigen des Fahrzeugfahrers, dass mindestens einer der Vielzahl von vordefinierten Fahrstilen nicht mit einem verfügbaren Kraftstoff-/Energiespeicher am Fahrzeug kompatibel ist, und
Verhindern der Auswahl des mindestens einen der Vielzahl von vordefinierten Fahrstilen, der nicht mit einem verfügbaren Kraftstoff-/Energiespeicher am Fahrzeug kompatibel ist.

## Revendications

1. Procédé de sélection d'un itinéraire pour un véhicule, comprenant :

a) l'association d'un module de navigation à un véhicule équipé de pneus ;
b) l'estimation (703) d'un poids du véhicule,
c) l'identification (705) d'au moins un itinéraire pour aller d'une origine à une destination ;

**caractérisé en ce qu'**il comprend

d) le calcul (1001) sur la base du poids estimé, pour ledit au moins un itinéraire, d'une autonomie de véhicule estimée pour chacun d'une pluralité de styles de conduite prédéfinis qu'un conducteur de véhicule est autorisé à définir ;
e) pour ledit au moins un itinéraire, la détermination du fait que l'autonomie de véhicule estimée pour au moins un de ladite pluralité de styles de conduite prédéfinis est ou non suffisante pour atteindre la destination, et
f) si l'autonomie de véhicule estimée pour au moins un de ladite pluralité de styles de conduite prédéfinis n'est pas suffisante pour atteindre la destination, le fait de rendre le conducteur de véhicule conscient que ledit au moins un de ladite pluralité de styles de conduite prédéfinis n'est pas compatible avec un stockage de carburant/énergie disponible au niveau du véhicule.

2. Procédé selon la revendication 1, dans lequel, à l'étape d), ladite autonomie de véhicule estimée pour ledit au moins un itinéraire est également basée sur les caractéristiques dudit au moins un itinéraire.

3. Procédé selon la revendication 1 ou 2, dans lequel ladite étape f) consistant à rendre le conducteur de véhicule conscient inclut un parmi :

la notification au conducteur de véhicule que ledit au moins un de ladite pluralité de styles de conduite prédéfinis n'est pas compatible avec un stockage de carburant/énergie disponible au niveau du véhicule, et l'empêchement de la sélection dudit au moins un de ladite pluralité de styles de conduite prédéfinis qui n'est pas compatible avec un stockage de carburant/énergie disponible au niveau du véhicule.

4. Procédé selon la revendication 1, dans lequel à l'étape c) ladite identification d'au moins un itinéraire pour aller d'une origine à une destination inclut l'identification d'au moins deux itinéraires alternatifs pour aller d'une origine à une destination, et dans lequel l'étape d), l'étape e) et l'étape f) sont effectuées pour chacun desdits au moins deux itinéraires alternatifs.

5. Procédé selon la revendication 4, dans lequel lesdites caractéristiques des au moins deux itinéraires alternatifs incluent des informations sur l'orographie des au moins deux itinéraires alternatifs.

6. Procédé selon la revendication 4 ou 5, dans lequel ladite estimation d'une autonomie de véhicule respective pour chacun desdits au moins deux itinéraires alternatifs inclut l'exploitation d'informations sur les conditions météorologiques le long des au moins deux itinéraires alternatifs.

7. Procédé selon l'une quelconque des revendications 4 à 6 précédentes, dans lequel ladite estimation d'une autonomie de véhicule respective pour chacun desdits au moins deux itinéraires alternatifs inclut la prise en compte d'informations de trafic sur les conditions de trafic le long des au moins deux itinéraires alternatifs.

8. Procédé selon l'une quelconque des revendications 4 à 7 précédentes, comprenant en outre la réception d'une sélection de conducteur de véhicule d'un des au moins deux itinéraires alternatifs et la communication à distance de la sélection de conducteur à un serveur d'informations sur le trafic.

9. Procédé selon l'une quelconque des revendications précédentes, dans lequel ladite estimation d'un poids du véhicule comprend :

a1) l'association d'une unité de surveillance de pneus à au moins un pneu équipant un tel véhicule, ladite unité de surveillance de pneus incluant au moins un élément de détection adapté pour générer un signal de détection descriptif des déformations subies par ledit pneu lors de la rotation sur une surface de roulement, lesdites déformations formant une zone de contact entre ledit pneu et ladite surface de roulement ;
a2) pendant la rotation d'au moins un pneu du véhicule équipé d'une telle unité de surveillance, l'échantillonnage dudit signal de détection généré par ledit élément de détection incluant le signal de détection généré en correspondance des passages dudit élément de détection à travers ladite zone de contact ;
a3) l'estimation du poids du véhicule sur la base de cette longueur estimée.

10. Procédé selon la revendication 9, dans lequel ledit échantillonnage dudit signal de détection généré par ledit élément de détection inclut un sous-échantillonnage dudit signal de détection pour un nombre desdits passages suffisant pour obtenir une longueur estimée de ladite zone de contact sur la base dudit signal de détection sous-échantillonné.

11. Procédé selon l'une quelconque des revendications précédentes, dans lequel ladite estimation du poids du véhicule comprend l'estimation d'une charge exercée sur ledit au moins un pneu par le véhicule, ladite charge étant estimée sur la base de ladite longueur estimée de la zone de contact et d'une pression de pneu.

12. Système d'estimation d'autonomie d'un véhicule (100), le système incluant un module de navigation et au moins une unité de traitement incluant des modules logiciels étant adaptés pour :

a) estimer un poids du véhicule,
b) identifier au moins un itinéraire pour aller d'une origine à une destination ; **caractérisé en ce que**
la au moins une unité de traitement inclut des modules logiciels adaptés pour :

c) calculer, sur la base du poids estimé, pour ledit au moins un itinéraire, une autonomie de véhicule estimée pour chacun d'une pluralité de styles de conduite prédéfinis qu'un conducteur de véhicule est autorisé à définir ;
d) pour ledit au moins un itinéraire, déterminer si l'autonomie de véhicule estimée pour au moins un de ladite pluralité de styles de conduite prédéfinis est suffisante pour atteindre la destination, et
e) si l'autonomie de véhicule estimée pour au moins un de ladite pluralité de styles de conduite prédéfinis n'est pas suffisante pour atteindre la destination, rendre le conducteur de véhicule conscient qu'au moins un de ladite pluralité de styles de conduite prédéfinis n'est pas compatible avec un stockage de carburant/énergie disponible au niveau du véhicule.

13. Système selon la revendication 12, dans lequel lesdits modules logiciels sont adaptés pour rendre le conducteur de véhicule conscient que ledit au moins un de ladite pluralité de styles de conduite prédéfinis n'est pas compatible avec un stockage de carburant/énergie disponible au niveau du véhicule par :

la notification au conducteur de véhicule qu'au moins un de ladite pluralité de styles de conduite prédéfinis n'est pas compatible avec un stockage de carburant/énergie disponible au niveau du véhicule, et l'empêchement de la sélection dudit au moins un de ladite pluralité de styles de conduite prédéfinis qui n'est pas compatible avec un stockage de carburant/énergie disponible au niveau du véhicule.

Fig. 1

Fig. 2

Fig. 3

(1)

(2)

## Fig. 4

EP 3 861 288 B1

Fig. 5

EP 3 861 288 B1

Fig. 6

```
                    ┌─────────────┐
                    │    BEGIN    │
                    └──────┬──────┘
                           │
                           ▼
        ┌──────────────────────────────────────┐
        │  STATISTICAL ESTIMATION OF TIRES PATCH│ ──── (701)
        │  LENGTH / VEHICLE LOAD ON TIRES BASED ON│
        │  UNDERSAMPLED SENSING SIGNAL           │
        └──────────────────┬───────────────────┘
                           │
                           ▼
              ┌────────────────────────┐
              │  ESTIMATION OF ACTUAL  │ ──── (703)
              │  VEHICLE WEIGHT        │
              └────────────┬───────────┘
                           │
  (15) ─□                  ▼
         ╲     ┌────────────────────────┐
  (13) ─□──────│  IDENTIFICATION OF     │ ──── (705)
         ╱     │  (ALTERNATIVE) ROUTE(S)│
  (14) ─□      └────────────┬───────────┘
                           │
                           ▼
              ┌────────────────────────┐
              │  RANGE ESTIMATION FOR  │ ──── (707)
              │  THE (ALTERNATIVE)     │
              │  ROUTE(S) BASED ON     │
              │  ESTIMATED WEIGHT      │
              └────────────┬───────────┘
                           │          (709)
                           ▼
              ┌────────────────────────┐
              │  SHOW ESTIMATED RANGE  │──□ ── (16)
              └────────────────────────┘
```

Fig. 7

FROM BLOCK 703 OF FIG. 7

(15)

(13)

(14)

**IDENTIFICATION OF ALTERNATIVE ROUTES "ROUTE 1" AND "ROUTE 2"** — (801)

**ESTIMATE "RANGE 1" FOR "ROUTE 1" AND "RANGE 2" FOR "ROUTE 2"** — (803)

**COMPARE ESTIMATED RANGES TO ROAD LENGTHS** — (805)

(N)   **ROAD LENGTH > ESTIM.'D RANGE?** — (807)   (Y)

**SHOW ESTIMATED RANGE** — (809)   (16)

**ISSUE ALERT** — (811)   (16)

Fig. 8

32

EP 3 861 288 B1

Fig. 9

(15)

(13)

(14)

IDENTIFICATION OF
ALTERNATIVE ROUTES:
"ROUTE 1" AND "ROUTE 2"     (901)

ESTIMATE "RANGE 1" FOR
"ROUTE 1" AND "RANGE
2" FOR "ROUTE 2"     (903)

COMPARE ESTIMATED
RANGES TO ROAD
LENGTHS     (905)

ROAD LENGTH OF
"ROUTE 1" > "RANGE 1"     (907)

(909)

SHOW
"ROUTE 2"
ONLY     (16)

EP 3 861 288 B1

33

*FROM BLOCK 705 OF FIG. 7*

Fig. 10

*RANGE ESTIMATION FOR THE (ALTERNATIVE) ROUTE(S) BASED ON ESTIMATED WEIGHT AND DRIVE STYLE*  (1001)

*FOR EACH ROUTE AND EACH DRIVE STYLE: CHECK IF ESTIMATED RANGE SUFFICIENT*  (1003)

*"ROUTE 1":*

*DRIVE STYLE "ECONOMY": OK*

*DRIVE STYLE "COMFORT": OK*

*DRIVE STYLE "SPORT": NO*

*FOR EACH ROUTE: IF ESTIMATED RANGE NOT SUFFICIENT FOR ONE OR MORE DRIVE STYLE, INFORM DRIVER OR PREVENT SETTING OF THAT DRIVE STYLE*  (1005)

(16)

**EP 3 861 288 B1**

**Patent documents cited in the description**

- US 8706416 B
- US 5913917 A
- US 2013179062 A1
- KR 20140042281 A
- WO 2013108246 A2
- US 2017101026 A1
- US 2014107913 A1
- US 2016097652 A1
- US 2012253655 A1
- US 2011112710 A1
- JP 2012218682 A
- US 2014257629 A1
- US 2014008132 A1
- US 2015006051 A1
- US 2017030728 A1
- US 9290165 B
- US 2015032287 A